(19) Europäisches Patentamt
European Patent Office
Office européen des brevets

(11) **EP 3 608 850 A1**

(12) **EUROPEAN PATENT APPLICATION**

(43) Date of publication:
**12.02.2020 Bulletin 2020/07**

(51) Int Cl.:
*G06Q 10/04* (2012.01)    *G06Q 10/06* (2012.01)

(21) Application number: **19190973.8**

(22) Date of filing: **09.08.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.08.2018   JP 2018151867**

(71) Applicants:
- **Kabushiki Kaisha Toshiba**
  **Minato-ku**
  **Tokyo 105-0023 (JP)**
- **Toshiba Infrastructure Systems &**
  **Solutions Corporation**
  **Kawasaki-shi, Kanagawa, Tokyo 212-0013 (JP)**
- **Toshiba Digital Solutions Corporation**
  **Kanagawa (JP)**

(72) Inventors:
- **Fukushima, Arika**
  **Tokyo (JP)**
- **Yamamoto, Takahiro**
  **Tokyo (JP)**
- **Aisu, Hideyuki**
  **Tokyo (JP)**
- **Shimokawa, Yusuke**
  **Kanagawa (JP)**
- **Shibata, Yasuhiro**
  **Kanagawa (JP)**
- **Kano, Makoto**
  **Kanagawa (JP)**

(74) Representative: **Hoffmann Eitle**
**Patent- und Rechtsanwälte PartmbB**
**Arabellastraße 30**
**81925 München (DE)**

(54) **ENERGY MANAGEMENT DEVICE, MODEL MANAGEMENT METHOD AND COMPUTER PROGRAM**

(57)    An information processing apparatus according to one approach includes a traveling state manager, a predictor, a prediction evaluator and a model update manager. The traveling state manager acquires traveling data including a plurality of features of a mobile apparatus. The predictor calculates a predicted value of consumed energy of the mobile apparatus based on a first classification rule and the traveling data, the first classification rule associating a plurality of first conditions with a plurality of first prediction models for the consumed energy used on satisfaction of the first conditions being associated with at least one of the plurality of features. The prediction evaluator determines whether update of the first classification rule is required based on a difference between the predicted value and an actual value. The model update manager generates a second classification rule based on the traveling data if the update is required.

FIG. 1

**Description**

<u>FIELD</u>

The present disclosure relate to an information processing apparatus, a model management method and a computer program.

<u>BACKGROUND</u>

An information provision system for EV (Electric Vehicle) predicts a reachable range (which may be called a driving range or a cruising range) of an EV based on its battery energy with high accuracy by referring to map information when the EV travels (or runs) an expressway (tollway) and then recommends to a user a service/parking area (SA/PA) for utilization The SA/PA may be called a transport cafe/a rest area/a rest spot. It is necessary to make a plan so that the EV can efficiently utilize SA/PAs having charging facilities so as to prevent the EV from running out of power. In order to make such a plan, a prediction model of power consumption of the EV is used to thereby estimate the reachable range of the EV. By selecting the SA/PA within the reachable range, it becomes possible to make the plan to prevent the EV from running out of power.

The power consumption of the EV is largely affected by external characteristics such as weather and a road environment in addition to basic characteristics (such as a vehicle type and weight) of the EV itself and a state (such as speed and use of an air conditioner) of the EV. If the basic characteristics of the EV change due to degradation or if influence due to change in the external characteristics is large, there is a case where the prediction model cannot ensure prediction performance of the power consumption.

<u>BRIEF DESCRIPTION OF THE DRAWINGS</u>

FIG. 1 is a block diagram of an information processing apparatus according to an approach;
FIG. 2 is a diagram illustrating a communication system according to the approach;
FIG. 3 is a diagram illustrating an example of route information;
FIG. 4 is a diagram illustrating an example of a network structure of the route information;
FIG. 5 is a diagram illustrating an example of traffic counter management information;
FIG. 6 is a diagram illustrating an example of weather information;
FIG. 7 is a diagram illustrating an example of road control information;
FIG. 8 is a diagram illustrating an example of vehicle information;
FIG. 9 is a diagram illustrating an example of charger information;
FIG. 10 is a diagram illustrating an example of calculation of power consumption;
FIG. 11 is a diagram illustrating another example of calculation of power consumption;
FIG. 12 is a diagram illustrating an example of learning data;
FIG. 13 is a diagram illustrating an example of a classification rule;
FIG. 14 is a flowchart illustrating an example of operation of a model manager;
FIG. 15 is a flowchart illustrating another example of the operation of the model manager;
FIG. 16A and FIG. 16B show a diagram illustrating an example of a model management table and a category table, respectively;
FIG. 17 is a diagram illustrating an example of traveling data;
FIG. 18 is a diagram for explaining a specific example of calculation of a remaining battery level of an EV;
FIG. 19 is a flowchart illustrating an example of operation of a prediction evaluator;
FIG. 20 is a flowchart illustrating an example of operation of a model update manager;
FIG. 21 is a flowchart illustrating another example of the operation of the model update manager;
FIG. 22 is a flowchart illustrating an example of operation of the information processing apparatus according to the approach;
FIG. 23 is a diagram illustrating an example of a system management screen; and
FIG. 24 is a diagram illustrating a hardware configuration of the information processing apparatus according to the approach.

<u>DETAILED DESCRIPTION</u>

According to one approach, an information processing apparatus includes: a traveling state manager, a predictor, a prediction evaluator and a model update manager.

The travelling state manager acquires traveling data including a plurality of features of a mobile apparatus, based on information associated with a travelling state of the mobile apparatus.

The predictor calculates a predicted value of consumed energy of the mobile apparatus based on a first classification rule and the traveling data. The first classification rule associates a plurality of first conditions with a plurality of first prediction models for the consumed energy. The first classification rule is configured to select the prediction model corresponding to a satisfied one of the first conditions The first conditions are associated with at least one of the plurality of features.

The prediction evaluator determines whether update of the first classification rule is required based on a difference between the predicted value of the consumed energy and an actual value of the consumed energy of the mobile apparatus.

The model update manager generates a second classification rule based on the traveling data if the update of the first classification rule is required. The second classification rule is configured to select the prediction model corresponding to a satisfied one of the second conditions. The second classification rule associates a plurality of second conditions with a plurality of second prediction models of consumed energy. The second conditions are associated with at least one of the plurality of features.

Below, an approach of the present invention will be described with reference to the drawings. While, in the following description, description will be provided using an electric vehicle (hereinafter, an EV) as an example of a mobile apparatus, the mobile apparatus may be mobile bodies other than the EV. Examples of such a mobile apparatus can include a train, a hybrid vehicle, a fuel cell vehicle, an airplane, a drone, an electric motorcycle, a vehicle having a diesel engine, a ship, or the like.

The EV travels on a road using charged power (charged energy) of a battery and moves to various points. In the present approach, an energy supply point which is a point at which the EV is charged is mainly used as the point of the EV. However, the point in the present approach is not limited to the energy supply point and may be an arbitrary point on a map. For example, the point may be home, a restaurant, a store or a point arbitrarily designated by a user of the EV.

Power (i.e., electric energy) is supplied to the EV at the energy supply point (hereinafter, referred to as a supply point or a charging point), and the supplied power is accumulated in the battery. The EV moves using the power accumulated in the battery. The EV needs to move to the next supply point and receive supply of power there before the EV runs out of power in the battery. In this manner, the EV moves to a destination while being charged at respective supply points. Note that one or a plurality of chargers (energy suppliers) are provided at the supply points, and the EV receives supply of power by being connected to an arbitrary charger in a wired or wireless manner.

Note that, while, in the present approach, because a case is assumed where the mobile apparatus is an EV, energy is supplied through charging, the supply point is a charging stand, and the energy supplier is a charger, if the mobile apparatus is a gasoline vehicle, energy resupply may read refueling, the supply point may read a gas station and a refueling device. Further, if the mobile apparatus is an airplane, a drone, or the like, the road may read a flight route, and, if the mobile apparatus is a ship, the road may read a water route. In this manner, processes similar to those in the present approach can be performed even on mobile bodies other than an EV.

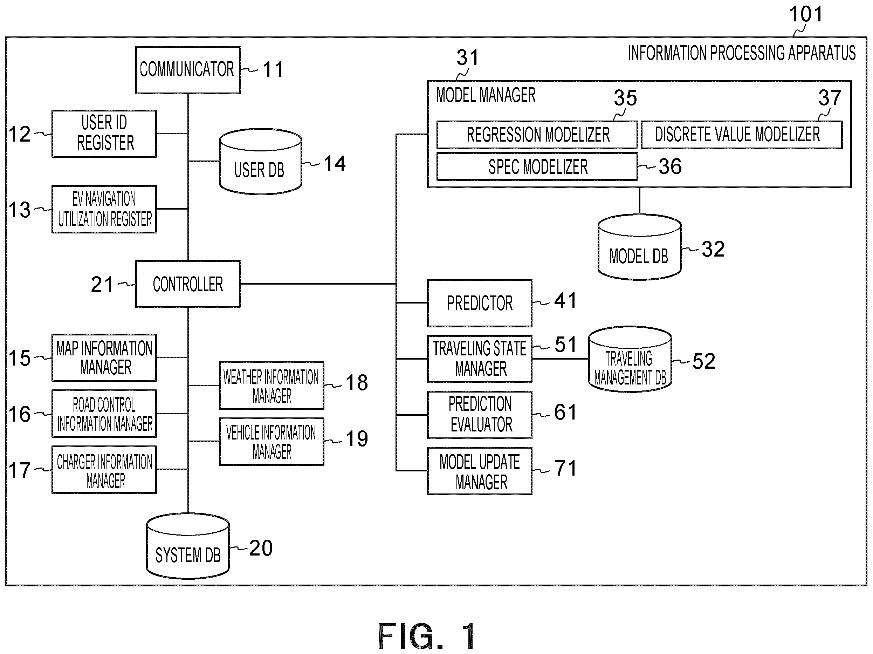

FIG. 1 is a block diagram of an information processing apparatus according to the approach of the present invention. An information processing apparatus 101 in FIG. 1 includes a communicator 11, a user ID register 12, an EV navigation utilization register 13, a user DB (database) 14, a map information manager 15, a road control information manager 16, a charger information manager 17, a weather information manager 18, a road information manager 19, a system DB 20 and a controller 21. Further, the information processing apparatus 101 includes a model manager 31, a model DB 32, a predictor 41, a traveling state manager 51, a traveling management DB 52, a prediction evaluator 61 and a model update manager 71. In addition, the information processing apparatus may include input means which allows an operator to input an instruction or data to the present device and a display which displays data to the operator. Examples of the input means can include a keyboard, a mouse, a touch panel, a microphone for speech input, or the like. Examples of the display can include, for example, an LCD (Liquid Crystal Display), a CRT (Cathode-Ray Tube), a PDP (Plasma Display Panel), or the like. The present information processing apparatus is an information provision system for EV which recommends an energy supply point to an EV which utilizes an expressway (tollway). The present information processing apparatus is provided at a facility management company, a traffic control station, or the like, as an example. However, the present information processing apparatus may be incorporated into an in-vehicle device such as a car navigation system (hereinafter, car navigation equipment) mounted on the EV, or may be provided on a road side. In the case where the information processing apparatus is disposed on the road side, the operator may remotely operate the present information processing apparatus.

The elements shown in FIG. 1 may be configured by circuitry. For example, the traveling state manager 51 may be configured by first processing circuitry, and the predictor 41, the prediction evaluator 61 and the model update manager 71 may be configured by second processing circuitry. The first processing circuitry and the second processing circuitry may be physically same hardware or may be different hardware.

The communicator 11 performs communication with various kinds of information devices, various kinds of servers, or the like, via a communication network.

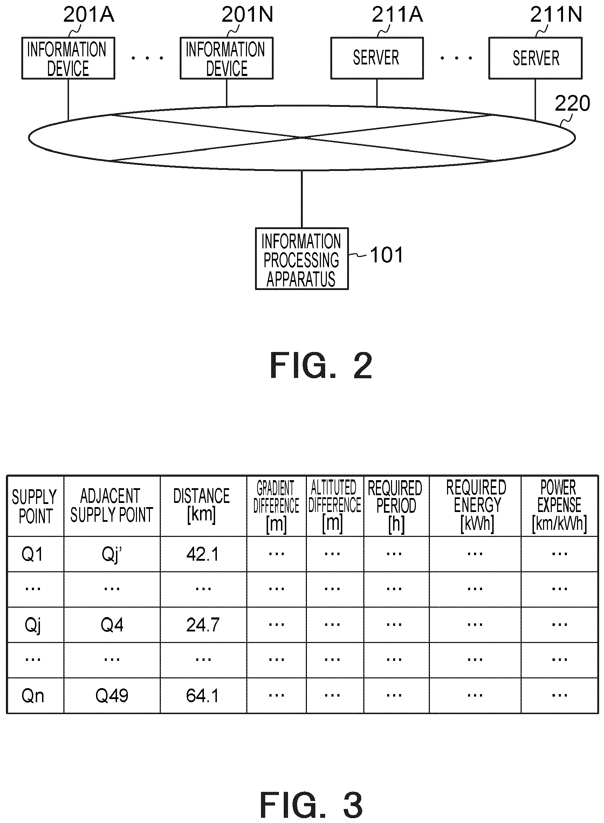

FIG. 2 illustrates a communication system including the information processing apparatus 101, various kinds of information devices and various kinds of servers. As illustrated in FIG. 2, the information processing apparatus 101 is connected to the information devices 201A to 201N and the servers 211A to 211N via the communication network 220. The communication network 220 is a wired, wireless, or wired-wireless hybrid network. The communication network 220 may include a relay device such as an access point of a wireless LAN.

The information devices 201A to 201N are, for example, a communication terminal (such as a smartphone, a tablet device, a mobile phone and a notebook PC) possessed by a user, an in-vehicle device such as car navigation equipment mounted on the EV, a charger provided at the supply point at which the EV is charged, and a communication device such as an ITS spot (ETC 2.0 device). The information devices 201A to 201N can perform communication with the present information processing apparatus in real time. The ETC 2.0 device can perform communication with at least one of the communication terminal and the car navigation equipment, and, for example, is disposed at a plurality of predetermined spots. The predetermined spot may be an ITS spot or a position along a route, a service area of the expressway, a tollgate, a building, or the like. The ETC 2.0 device may be provided at an entrance and an exit of a power feeding point, in which case, entrance time, exit time of the EV, the number of entering EVs and the number of exiting EVs may be detected. The communication terminal may be operated by other passengers (for example, a person who sits in the front seat) of the EV driven by the user. Alternatively, the user may operate the communication terminal, and other representative may drive the EV. Input to the communication terminal may be performed through manual input or speech input. In the following description, the information devices 201A to 201N will be collectively referred to as an information device 201.

The servers 211A to 211N are a map information management server which manages map information, a weather information management server which manages weather information, a vehicle information management server which manages vehicle information, a charger information server which manages charger information, a road control information server which manages road control information, or the like. Servers other than those described above may be disposed. In the following description, the servers will be collectively referred to as a server 211.

The user ID register 12 receives a user registration request from the information device 201, and registers the user in service (EV navigation service) of the information provision system for EV according to the present approach. For example, the user operates the information device 201 to open an application or a web page for registering the user in the EV navigation service, and accesses the user ID register 12. The user ID register 12 acquires personal information on the user and information (such as a vehicle type, battery capacity, a battery degradation level, a cumulative traveling distance and a type of tires) of the EV to be utilized by the user, and sets these kinds of information as user information. The user ID register 12 issues a user ID (EV_ID) to the user and registers the user ID and the user information in the user DB 14 in association with each other.

The EV navigation utilization register 13 receives a utilization registration request from the information device 201 and performs utilization registration for starting EV navigation service. For example, the user operates the information device 201 outside, at home, in the EV, or the like, to open an application or a web page for receiving the EV navigation service and transmits the utilization registration request including information necessary for receiving the present service to the EV navigation utilization register 13 from the information device 201. For example, information such as traveling date and time (such as scheduled date and time of departure of a departure IC (interchange), current date and time and scheduled date and time of departure of home), a departure place (such as a departure IC of the expressway), a destination (such as a destination IC), battery capacity of the EV (which may be omitted in the case where a notification has been made upon user registration), a battery degradation level (which may be omitted in a case where a notification has been made upon user registration), a remaining battery level of the EV (a remaining amount of energy), use of an air conditioner (such as ON/OFF, a set mode and a set temperature), a cumulative traveling distance (which may be omitted in the case where a notification has been made upon user registration), a type of tires (which may be omitted in the case where a notification has been made upon user registration) and the number of passengers, is transmitted. As these kinds of information, if the information device 201 is car navigation equipment, information set at the car navigation equipment may be transmitted, or if the information device 201 is a smartphone, or the like, information input by the user may be transmitted. Acquired these kinds of information will be referred to as utilization registration information. The EV navigation utilization register 13 issues an ID (a traveling ID) to service utilization of this time, stores the traveling ID in the user DB 14 in association with the utilization registration information and notifies the traveling ID to a traveling state manager or a model manager or both of them which will be described later. Further, the present device performs communication with the information device 201 of the user after utilization registration to acquire information such as location information of a GPS, current time, a remaining amount of power of the battery (the remaining battery level) and use of an air conditioner, and notifies these kinds of information to the traveling state manager or the model manager or both of them which will be described later. Examples of a timing for communication can include real time, a timing for each certain period, a timing at which the EV passes through a predetermined IC such as a departure IC registered by the user, a timing at which the present device issues a request and acquires a response to the request, a timing at which the EV enters or exits a service area/parking area (SA/PA), a timing at which the EV passes near a SA/PA, or the like. The SA/PA may be called a transport cafe/a rest area/a rest spot. This is similarly applied below.

The user DB 14 holds information registered by the user ID register 12 and the EV navigation utilization register 13. The user DB 14 is a hardware storage device such as, for example, a memory device, a hard disk device and an SSD device.

The controller 21 controls the whole of the information processing apparatus 101 by controlling respective parts of the information processing apparatus 101 and realizes operation of the information provision system for EV.

The map information manager 15 acquires map information from the server 211 and holds and manages the acquired map information in the system DB 20. The map information is information indicating information such as locations (longitude, latitude), sizes, ranges, or the like, of map elements. For example, the map information includes altitude information associated with each location on a map, distance information on each route (each route of the expressway, each route of a general road, or the like), a gradient, an angle of a curve, a route, a direction, a KP (kilo post), a shape of a JCT (junction), a tunnel, a light portion (a portion other than a tunnel) and a state of a road surface (such as a state of pavement). Further, the map information includes the number of lanes in the expressway, locations of an interchange (IC), a service area/parking area (SA/PA), or the like.

Further, the map information includes information on the supply point, the SA/PA point, the IC and the JCT point as the above-described map elements. Still further, the map information may include distance information on the route and information on a required traveling period of the route as route information between the supply points, the SA/PA points, the ICs and the JCT points.

FIG. 3 illustrates an example of the route information between the supply points. The required traveling period may be an average of past measurement values or may be a period required in the case where the EV travels the distance at predetermined speed. Further, the route information may be information on required energy and power expense required for traveling of the route. The required energy and the power expense may be a statistical value (such as an average value and a median value) of past results or may be a value calculated using a calculation formula or through simulation. The route information may be expressed with a typical network structure.

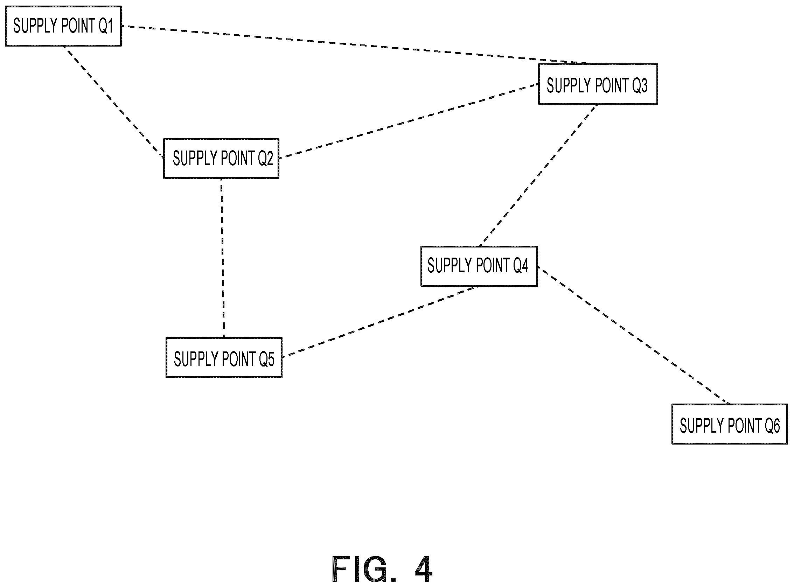

FIG. 4 illustrates an example of a network structure of a route. Nodes indicating supply points Q1 to Qn are connected with links indicated with dashed lines. The link connects the supply points which are adjacent to each other. It can be understood that the supply point Q1 is adjacent to the supply point Q3 and the supply point Q2. Further, there is one route from the supply point Q1 to the supply point Q3, and there is one route from the supply point Q1 to the supply point Q2. Characteristics of the route between the supply points indicated by the both nodes connected with the link are allocated to the link (in FIG. 4, illustration of the characteristics of the route is omitted). While, in the present example, a network structure of only the supply points is illustrated, in addition to the supply points, SA/PA points, ICs and JCT points may be included as nodes.

Further, the map information may include traffic counter (TC) management information which identifies a TC existing in a section between the respective supply points. The TC is a device which acquires information regarding traffic in the section between the supply points. The TC is an example of the above-described map elements.

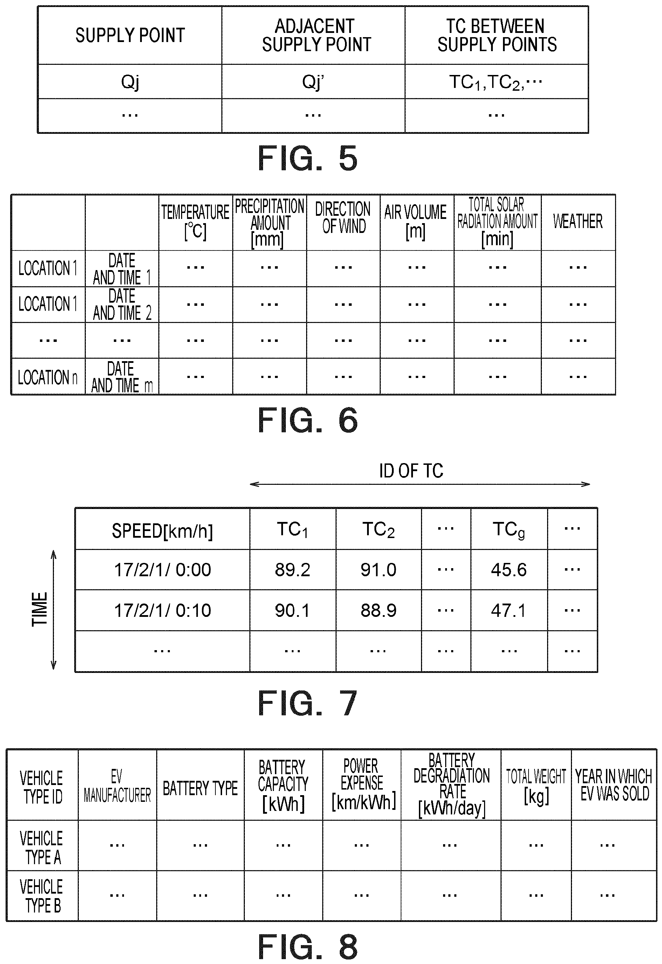

FIG. 5 illustrates an example of the TC management information. In data in the first entry, traffic counters $TC_1$, $TC_2$, ... are disposed between a supply point Qj and an adjacent supply point Qj'. Note that it is not necessary that the traffic counters are disposed in order of $TC_1$, $TC_2$, ....

The map information manager 15 may acquire and update all or part of the map information from the server 211 for each certain period or in real time.

The weather information manager 18 acquires weather information from the server 211 and holds and manages the acquired weather information in the system DB 20.

FIG. 6 illustrates an example of the weather information. The weather information includes, for example, information on a temperature in each region and at each date and time determined in advance, whether or not there is a rainfall, an precipitation amount, wind speed, a direction of wind, a total solar radiation amount, an amount of snowfall, a temperature of a road surface, an intensity of light, a range of visibility (fog), radiation, a torrential rainfall, or the like. The weather information may include predicted weather information in the case where predicted weather information in the future can be acquired, in addition to past weather information and weather information up to the present. The weather information manager 18 may acquire the weather information from the server 211 for each certain period or in real time.

The road control information manager 16 acquires road control information regarding each route (section) from the server 211 and holds and manages the acquired information in the system DB 20. The road control information can include, for example, traffic counter (TC) information, and ETC information (such as the number of entering EVs, the number of exiting EVs, a type of the EV, and a remaining battery level of the EV). In addition, information regarding an occurring event can include closure, congestion, an accident, a disabled vehicle, construction, a falling object, a fire, a disaster, speed limit, or the like. Further, examples of the predicted information can include prediction of a congestion, prediction of occurrence of an accident, prediction of a torrential rainfall, prediction of a sediment disaster, or the like. Locations where the traffic counters are provided are known in advance in the above-described map information (see FIG. 5).

FIG. 7 illustrates an example of the traffic counter information. The information of the traffic counter is, for example, information on speed [km/h], occupancy [%], an amount of traffic [vehicles/h], density of vehicles [vehicles/km], or the like. The speed is, for example, average speed, maximum speed, minimum speed, or the like, for each certain period. The road control information manager 16 may acquire the road control information from the server 211 for each certain period or in real time. Further, the road control information may be acquired from the server 211 every time the road control information is updated. Note that the road control information manager 16 may directly acquire the traffic counter information from the traffic counter instead of acquiring from the server 211. Each row indicates time, and each column indicates an ID of a TC. A value of the speed (average speed) is stored in each item of a table. In the following description, a case will be mainly assumed where the traffic counter information is the road control information.

The vehicle information manager 19 acquires information (vehicle information) such as a vehicle type ID, an EV manufacturer, battery capacity, a type of battery (such as a lithium-ion battery), total weight (weight when passengers get on the EV to full passenger capacity and weight of the EV itself), power expense battery degradation rate and a year in which the EV was sold from the server 211, and holds and manages the acquired information in the system DB 20.

FIG. 8 illustrates an example of the vehicle information. The vehicle type ID has a value different for each vehicle type. The server 211 which manages the vehicle information may be a server of the EV manufacturer or may be a server which collectively manages vehicle type information on a plurality of EV manufacturers. The vehicle information manager 19 may acquire the vehicle type information from the server 211 for each certain period. Alternatively, the vehicle type information may be acquired from the information device 201 instead of being acquired from the server 211.

The charger information manager 17 acquires charger information regarding one or a plurality of chargers (energy suppliers) provided at respective supply points from the server 211. The charger information manager 17 holds and manages the acquired charger information in the system DB 20. The charger information manager 17 grasps the number of chargers at the respective supply points.

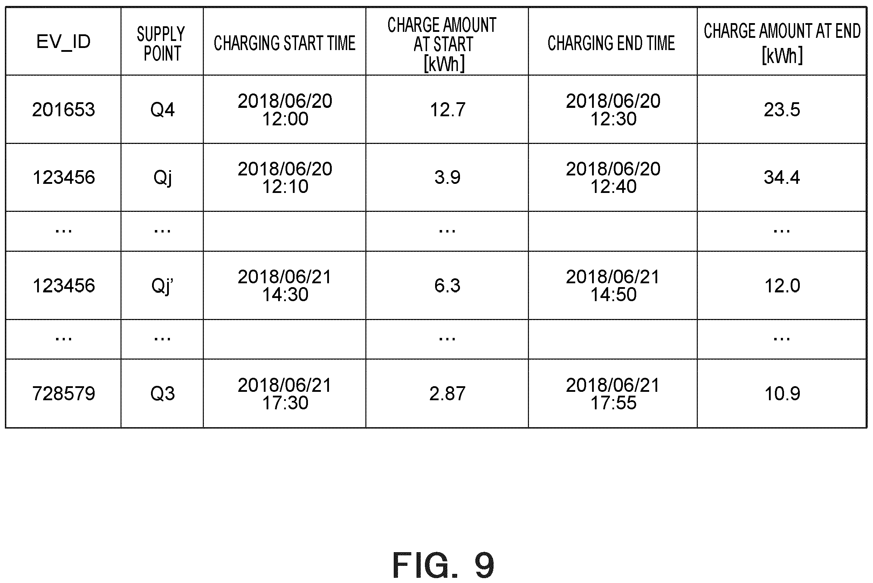

FIG. 9 illustrates an example of the charger information. The charger information includes, for example, a user ID (EV_ID) of the user who has performed charging with the charger, a supply point ID, a charge amount at the start of charging, a charge amount at the end of charging, charging start time, and charging end time. In addition, information such as charging efficiency and the number of times of charging may be held. The charge amount at the start of charging is a power amount accumulated in the battery of the EV at the charging start time at the charger. The charge amount at the end of charging is a power amount accumulated in the battery of the EV at the charging end time at the charger. A difference between the charge amount at the end of charging and the charge amount at the start of charging is a power amount charged to the EV. In place of the charge amount at the start of charging and the charge amount at the end of charging, the charger information may include one of the charge amount at the start of charging and the charge amount at the end of charging, and information on the amount of charged power. The charger information indicates energy supply history at the corresponding supply point. The charger information manager 17 may acquire the charger information from the server 211 for each certain period or in real time.

The charger information manager 17 may acquire the charger information directly from the charger through communication instead of acquiring from the server 211. Alternatively, the user may input the charger information (such as location information of the GPS and the amount of charged power) to the information device 201, and the charger information manager 17 may acquire the charger information from the information device 201. Alternatively, the information device 201 (the in-vehicle device such as the car navigation equipment) may read out information on the amount of charged power from the EV and transmit the charger information to the information processing apparatus 101.

By using the charger information for the same user in chronological order, it is possible to obtain consumption history information indicating power consumption, a traveling period, traveling speed, or the like, of the user for each section between the supply points. The traveling period can be obtained by subtracting charging end time at the previous supply point from charging start time at a certain supply point as an example. The traveling speed (average traveling speed) can be obtained by dividing the distance of the section by the traveling period. Note that it is also possible to employ a configuration where information on the traveling speed and the traveling time is acquired in real time through communication with the EV, and the traveling speed and the traveling period are grasped from the information acquired from the EV.

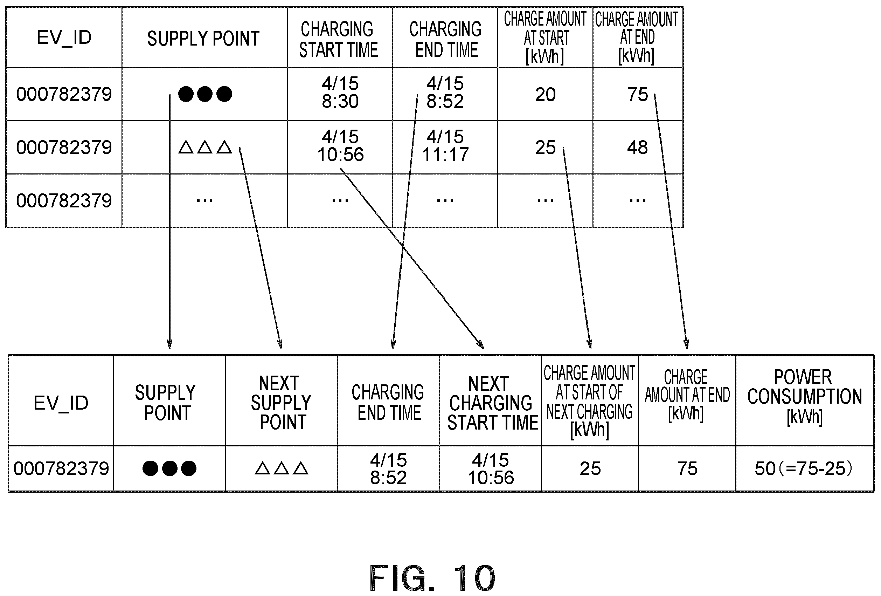

FIG. 10 illustrates an example of calculation of power consumption in a certain section as the consumption history information. An example is illustrated where power consumption for movement of a certain section is calculated from the charger information concerning the same certain EV. A supply point (a supply point in the second entry) for which charging start time is closest to charging end time at another supply point (a supply point in the first entry) is specified as the next supply point. That is, an ID of a supply point Qj (the previous supply point) indicated with three black circles and an ID of the next supply point Qj' (the next supply point) indicated with three triangles are specified.

Further, time at which charging is finished at the supply point Qj (previous utilization end time), start time of charging at the supply point Qj' (the next utilization start time), a charge amount when charging is started at the supply point Qj' (a charge amount at the start of the next charging), and a charge amount when charging is finished at the supply point Qj (a charge amount at the end of the previous charging) are specified. By the charge amount at the start of the next charging being subtracted from the charge amount at the end of the previous charging, the power consumption which has consumed in movement from the supply point Qj to the supply point Qj' is calculated.

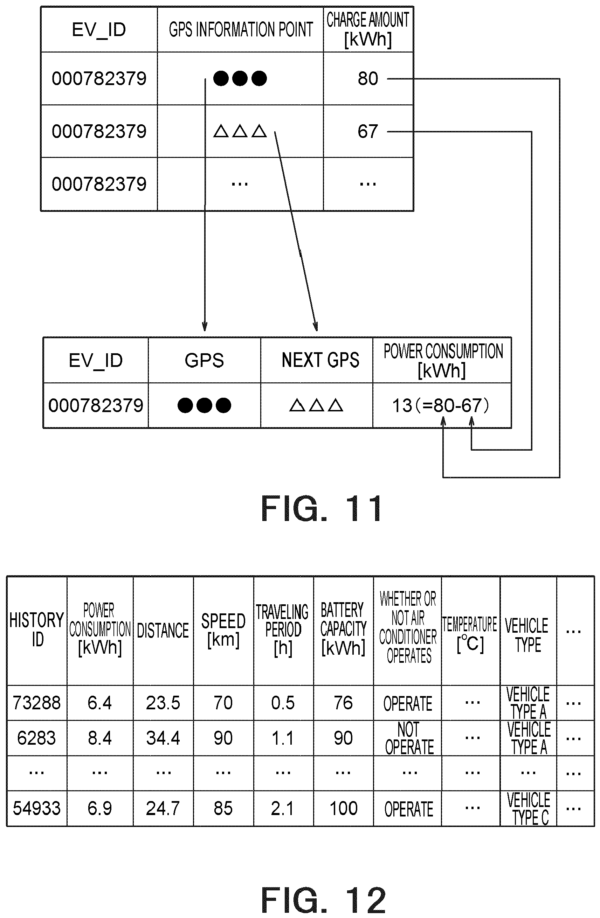

FIG. 11 illustrates another example of calculation of the power consumption. In this example, the information acquired from the information device (smartphone) is used. This information indicates an ID (EV_ID) which identifies the user, a GPS information point and the charge amount. In this case, by a charge amount at a certain point being subtracted from a charge amount at the next point, the power consumption is calculated. The GPS information point may be coordinate acquired by the GPS or may be name of a location, a facility, or the like, associated with the coordinate in the map information.

The system DB 20 holds information (which may be referred to as external information) acquired by the above-described respective managers. The external information acquired by the respective managers may be held in a buffer within each manager. The buffer is, for example, a memory device, a hard disk device, an SSD device and a hardware storage device. Further, in the system DB 20, an operating system, an information processing program and various kinds of data to be used for information processing are stored. The operating system is a computer program for controlling overall operation of the information processing apparatus 101. The information processing program is a computer program to be used by the information processing apparatus 101 to realize each function of information processing which will be described later. The system DB 20 is, for example, a memory device, a hard disk device, an SSD device and a hardware storage device.

The model manager 31 generates a model (prediction model) which calculates predicted power consumption of the EV, using a plurality of pieces of learning data. The learning data is generated using all or part of the consumption history information (charger information), the weather information, geographical information, the vehicle information, the road control information and information acquired from the information device (such as a smartphone and car navigation equipment), as an example. These kinds of information are acquired from the map information manager 15, the road control information manager 16, the charger information manager 17, the weather information manager 18, the vehicle information manager 19 and the information device 201.

The model manager 31 generates the learning data by associating all or part of these acquired pieces of information. For example, the traveling data is generated by associating power consumption in a certain traveling section (section between the supply points), weather information (such as a temperature) at traveling date and time of the route, and geographical information (such as a distance and a gradient) of route of a certain traveling section, and the traveling data is set as the learning data. It is also possible to utilize the traveling data acquired and managed by the traveling state manager 51 which will be described later as the learning data. Here, the traveling data generated for learning may be the same as or may be different from the traveling data managed by the traveling state manager 51.

FIG. 12 illustrates an example of the learning data. A history ID is an identifier for identifying the learning data. The power consumption is a power amount used for traveling in the traveling section. For example, the power consumption can be acquired from the aforementioned charger information (history information). A distance is a distance of the traveling section, and speed is average speed of traveling. A traveling period is a period required for traveling in the traveling section. Battery capacity is battery capacity (which will be also referred to as total capacity of the battery) mounted on the EV. Whether or not an air conditioner operates indicates whether or not an air conditioner is powered on while the EV is traveling. A temperature indicates a temperature during traveling. Further, a vehicle type indicates a type of the EV registered by the user. Items indicated here are merely an example, and other items may exist, or part of the illustrated items does not have to exist. For example, information specifying the traveling section, a gradient of the route, humidity, a remaining battery level, or the like, may be included in the learning data. Each item included in the learning data corresponds to a feature of the EV. The speed (average speed), the distance, the traveling period, the power consumption, whether or not the air conditioner operates, or the like, indicate an operation condition of the EV, the remaining battery level, the battery degradation level, or the like, indicate characteristics of the EV, and the temperature, the gradient, or the like, indicate an environment where the EV travels. These are an example of information indicating a travelling state of the EV.

Note that a route (traveling section) used by the EV to move from the supply point Qj to the next supply point Qj' may be specified from information (such as GPS information) acquired through direct communication with the information device 201. As another method, it is also possible to estimate the route used by the EV from the consumption history information and the geographical information. In the case where a route used for movement between the supply point Qj (For example, Q1) at which energy is supplied to a certain EV and the supply point Qj' (for example, Q6) at which energy is supplied to the EV next is estimated, a shortest movement path (shortest path) from the supply point Qj to the next supply point Qj' may be estimated as the route used for movement. As a method for solving a shortest path problem, typical Dijkstra's algorithm, Bellman-Ford algorithm, Gabow algorithm, Warshall-Floyd Algorithm, or the like, can be used. The obtained route can be expressed as, for example, a supply point list like (Qj, Q4, ..., Qj').

The above-described generation of learning data is merely an example, and combination of types of information to be used for creating the learning data can be arbitrarily determined. It is also possible to generate the learning data further using at least one of the vehicle information on the EV and the road control information at date and time at which the EV travels. The learning data is generated using, for example, information on a past certain period.

The model manager 31 classifies a plurality of pieces of learning data into a plurality of groups (which may be referred to as clusters) in accordance with a classification rule. The classification rule has a criterion based on at least one of, for example, a traveling distance, a traveling period, traveling speed, a remaining battery level, gradient information, a temperature, a vehicle type, or the like.

One or a plurality of classification rules are stored in the model DB 32. The classification rule is previously created through operation by the operator and stored in the model DB 32. The classification rule may be updated through operation by the operator. Further, the classification rule may be created or updated through processing which will be described later. Further, in the case where a plurality of classification rules are stored, a flag which specifies a classification rule to be used for prediction may be set. The classification rule may have any structure such as a decision tree and a cluster model.

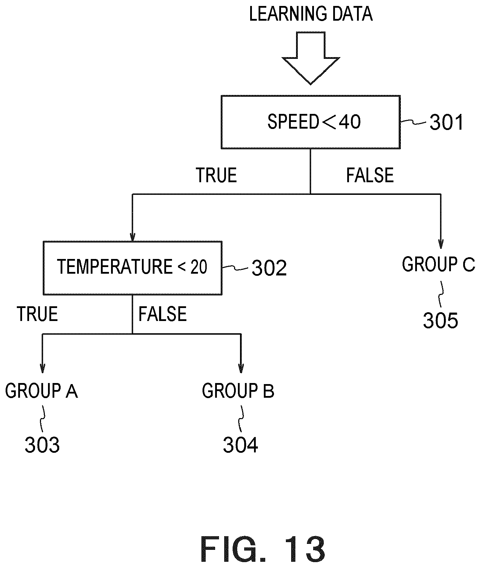

FIG. 13 illustrates an example of the classification rule. This classification rule is an example of a decision tree. The decision tree includes nodes (non-terminal nodes) 301 and 302 to which features are allocated, terminal nodes 303, 304 and 305 to which a group A, a group B and a group C are allocated. Conditions of the features (branch conditions) are set at the nodes 301 and 302, and the nodes 301 and 302 are made to branch into sub-nodes in accordance with the satisfied branch conditions. The learning data is finally classified into one of the group A, the group B and the group C corresponding to the terminal nodes 303 to 305 by such a structure. For example, if a value of the traveling speed (feature) included in the learning data is less than 40 km/h, and the temperature (feature) is less than 20°C, the learning data is classified into the group A. In this example, while the features of the nodes of the decision tree are only the traveling speed and the temperature, other items (for example, the gradient) may be selected as the features. Further, while a depth of the decision tree is 2 in the example of the drawing, the depth may be 1 or 3 or greater. As will be described later, prediction models are respectively associated with the respective groups. Therefore, the decision tree is a classification rule in which a plurality of first conditions of the features are associated with a plurality of first prediction models and in which the first prediction models are selected on satisfaction of the corresponding first conditions.

The model manager 31 generates a prediction model (model parameter) for each group on the basis of the learning data belonging to each group classified with the classification rule. The model manager 31 stores the generated prediction model in the model DB 32. The model DB 32 stores a prediction model for each group.

As a construction method of the prediction model, there are a number of methods such as artificial intelligence, machine learning, black box modeling, and white box modeling which defines a physical model. The black box modeling is a method for performing modeling using regression, a neural network, support vector machine (SVM), statistics, or the like, in the case where characteristics of a target are unknown. The white box modeling is modeling which is performed while a physical model, or the like, are defined in the case where characteristics of a target is known. In the present approach, as an example, a prediction model by a sum of a plurality of models will be described. In this case, individual models which constitute the prediction model may be referred to as sub-models. A type of the prediction model can be typically expressed using the following expression (1).

[Expression 1]

$$\hat{y} = \sum_{i=1}^{LP} \beta_i * \hat{y}_i \ ...(1)$$

"$\hat{y}_i$" is a predicted value (output value) of the i-th model, "$\beta_i$" is a weight coefficient of the i-th model. "LP" is the number of models. "$\hat{y}$" is an output value of the prediction model, and is a weighted sum of power consumption calculated using each sub-model "$\hat{y}_i$". The number of sub-models may be one. The predicted value "$\hat{y}$" of the power consumption indicated with the sub-model is a value including section power consumption while the EV is traveling, and, in addition, the sub-model may include power consumption of an air conditioner, power consumption of a wiper, power consumption of car navigation equipment, charging capacity of a smartphone which is charged by a user of the EV inside a vehicle, or the like.

Examples of the sub-model can include a regression model, a spec model and a discrete value model. The regression model and the spec model are an example of a continuous value model in which a continuous value is dealt with as the feature. The discrete value model is an example of a discrete value model in which a discrete value is dealt with as the feature. The model manager 31 includes a regression modelizer 35 which generates a regression model, a spec modelizer 36 which generates a spec model, and a discrete value modelizer 37 which generates a discrete value model. As an example, "$\hat{y}_1$" is a regression model, "$\hat{y}_2$" is a spec model, and "$\hat{y}_3$" is a discrete value model. Note that, concerning the regression model, the following (1-1) may be used in view of standard deviation of an error (i.e., a difference) between the predicted value and a true value (measured value).
[Expression 2]

$$\hat{y} = \sum_{i=1}^{LP} \beta_i * \hat{y}_i + \gamma SD \quad ...(1\text{-}1)$$

"SD" is a value of standard deviation, or the like, of an error between the predicted value and the measured value of the prediction model, and "$\gamma$" is a weighting coefficient. In the following description, while (1) is used as a type of the prediction model, the present invention can be similarly implemented also in the case where (1-1) is used. Further, "SD" may be input by an operation operator.

In the case where the model is a multiple regression model, a basic function "$\hat{y}_1$" = f(x) can be, for example, expressed as follows.
[Expression 3]

$$\hat{y}_1 = w_0 + w_1 x_1 + w_2 x_2 + w_3 x_3 + \cdots + w_n x_n \quad ...(2)$$

"$w_0, w_1, w_2, w_3, ..., w_n$" are model parameters to be estimated. "$x_1, x_2, x_3, ..., x_n$" are input variables (features). "$\hat{y}_1$" is an output variable. Note that, to absorb a difference in measurement units of the respective input variables, the output variables and all the input variables may be normalized to an average value of 0 and dispersion of 1 (scaling). Examples of the input variables can include a distance, a required period, an ambient temperature, or the like. These are items included in the learning data. For example, "$x_1$" is a distance, "$x_2$" is a required period, and "$x_3$" is an ambient temperature. The input variables may be other values calculated from a plurality of items included in the learning data. For example, speed obtained by dividing the distance by the required period may be set as the input variables.

In a case of the spec model, a basic function $\hat{y}_2$ = f(x) can be expressed as the following expression (3). "w" is a coefficient or a constant to be estimated. "x" is a certain feature. "$\hat{y}_2$" is an output variable. "w" may be a fixed value (for example, 1). "x" may be a value of an item included in the learning data or an output value "$\hat{y}_1$" of the regression model of (2). Power consumption calculated using the spec model depends on, for example, the vehicle type and the battery capacity.
[Expression 4]

$$\hat{y}_2 = w * x \quad ...(3)$$

(Example in the case where model "$\hat{y}_2$" indicates power consumption by traveling)

The feature "x" may be a distance (km) / power expense (km/kWh). In this case, the power expense may be a value in a catalog spec or may be a coefficient to be estimated. "w" may be a power expense ratio (power expense of a vehicle type A / power expense of a vehicle type B), and "x" may be power consumption of the vehicle type B (value obtained using the regression model). The power expense ratio may be a coefficient to be estimated. In this case, it can be considered that the model is a model corresponding to a group to which the vehicle type A and the vehicle type B belong.
"w" may be a battery degradation level, and "x" may be power consumption using the regression model. The battery degradation level may be, for example, SoH of the battery of the EV / average SoH, or may be a cumulative traveling distance of the EV / an average cumulative traveling distance. The SoH is a State-of-Health, and is an index indicating the battery degradation level.
"w" may be total weight of the EV and luggage / total weight of the EV (or average total weight), and "x" may be power consumption by the regression model. The total weight of the EV and the luggage / the total weight of the vehicle (or average total weight) may be determined on the basis of a catalog value or may be a coefficient estimated through learning. The total weight of the EV and the luggage is, for example, weight when a maximum allowable number of persons and luggage are mounted on the EV. (Example in the case where the model "$\hat{y}_2$" indicates power consumption by an air conditioner)
The feature "x" is an operating period (h) of an air conditioner, a coefficient "w "is a coefficient to be estimated, and its unit is kWh/h.
The feature "x" may be a temperature difference ($\Delta°C$), the coefficient "w" may be a coefficient to be estimated, and its unit may be kWh/$\Delta°C$.

(Example in the case where "^y$_2$" indicates power consumption by a wiper)

The feature "x" is an operating period (h) of a wiper, a coefficient "w" is a coefficient to be estimated, and its unit is kWh/h.

In a case of the discrete value model, a basic function ^y$_3$ = f(x) can be expressed as the following expression (4). [Expression 5]

$$\hat{y}_3 = C \quad ...(4)$$

Constants include, for example, power consumption of the air conditioner of the EV = 3 (kWh), or a charge amount of the smartphone = 1 (kWh). In a case of the discrete value model, "C" is a coefficient to be estimated or a constant (such as a value of a catalog spec). An item of "C" is included in the learning data. The power consumption by the discrete value model is, for example, a power amount consumed by operation other than traveling. As an item of the constant "C", it can be considered that a model corresponding to a specific vehicle type, season and a road surface state is generated. In the case where the feature is a discrete value having a plurality of values (for example, spring, summer, fall and winter in the case where the feature is season), the discrete value can be dealt with in the same way as a binary discrete value by making the discrete value dummy variables which are typically publicly known.

The model parameter "w" in the expression (2), the coefficient "w" in the expression (3) and the constant "C" in the expression (4) only have to be obtained by applying publicly-known optimization algorithm such as a maximum-likelihood method and a least-square method to the expression (1).

The model manager 31 generates the prediction model using at least one of the respective modelizers. The prediction model "^y" is generated for each group. The generated prediction model is stored in the model DB 32. Types of the respective sub-models constituting the prediction model may be different for each group. For example, a discretization model included in the prediction model of the group A may be a value of power consumption of the air conditioner, and a discretization model included in the prediction model of the group B may be a value of a charge amount of the smartphone. In this case, a plurality of types are prepared for each sub-model, combination of the types between the sub-models is generated, and each type of combination is evaluated. It is only necessary to use combination with the highest evaluation for each group. Note that transfer learning may be utilized for the regression model concerning a group with a few pieces of learning data.

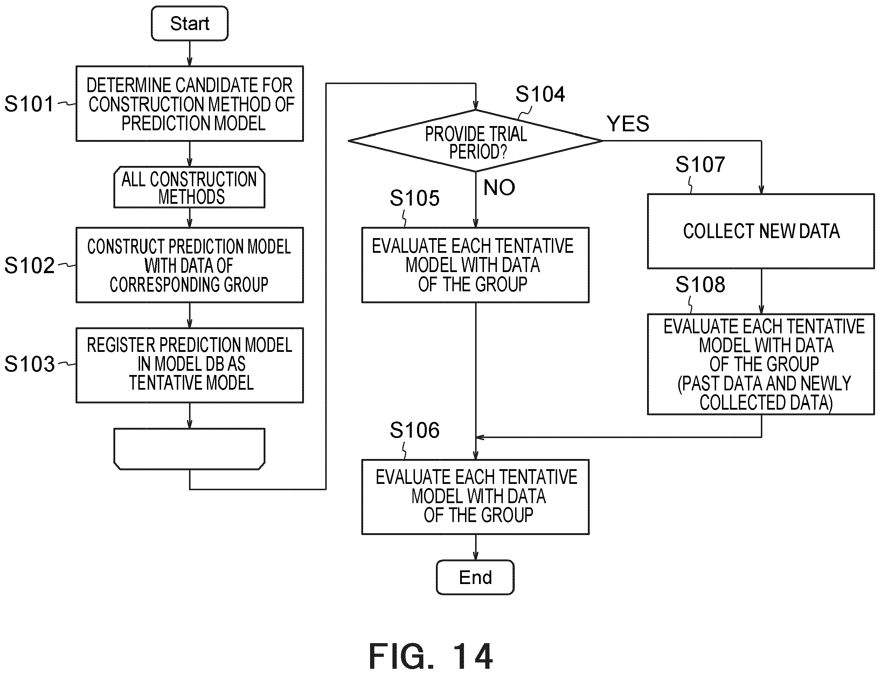

FIG. 14 is a flowchart illustrating an example of operation of the model manager 31. The operation of the present flowchart is performed for each group. Concerning a target group, one or a plurality of candidates for a construction method of the prediction model are determined (S101). Examples of the construction method can include a model indicating a sum of the regression model, the spec model and the discrete value model, a model indicating a sum of the regression model and the spec model, a model indicating a sum of the neural network, the spec model and the discrete value model, or the like. More construction methods can be considered by types of individual sub-models being further changed.

A new prediction model is constructed using learning data belonging to the target group (S102). The prediction model constructed using each construction method is registered in the model DB 32 as a tentative model (S103). Whether a trial period is provided for each tentative model is judged (S104). For example, when the model is newly constructed, it is judged that a trial period is not provided, and, when updating processing of the prediction model is performed, it is judged that a trial period is provided. Further, the trial period may be arbitrarily set by the operation operator. The judgment may be made using other methods.

In the case where a trial period is not provided (No), the tentative model is evaluated using the learning data of the target group (S105). As an example, an evaluation value (model evaluation value) is calculated using a sum of errors (prediction errors) between output values of the tentative model and actual values. A tentative model with the highest evaluation (with the smallest model evaluation value) is selected as the prediction model (S106). Tentative models which are not selected may be deleted from the model DB 32.

Here, each tentative model may be generated and evaluated using a cross-validation method. In this case, in step S102, the learning data belonging to the target group is divided into "K" pieces (the number of crossing). "K" is an integer of 2 or greater. Among them, one piece is used as test data and the remaining "K-1" pieces are used as training data. A model is constructed using the training data. In step S105, the constructed model is evaluated using the test data. Generation of models and evaluation of models are performed "K" times respectively using "K" pieces of divided data as the test data, to calculate respective evaluation values (model evaluation values). In step S106, a statistical value (such as, for example, an average value, a median value, dispersion, quartile, a maximum value and a minimum value) of the model evaluation values is calculated. A tentative model with the highest evaluation among the respective tentative models is selected as the prediction model on the basis of the statistical value. There is a case where the statistical value is greater as the evaluation is higher and a case where the statistical value is lower as the evaluation is higher, depending on evaluation methods.

Meanwhile, in step S104, in the case where a trial period is provided (Yes), new learning data is collected (S107). Then, the respective tentative models are evaluated using the newly collected learning data and the learning data acquired in the past (S108). The evaluation method is similar to that described in step S105 except that the newly collected learning data is used as data to be used for evaluation as a trial. Note that, in the case where there are pieces of the newly collected learning data which are sufficient for evaluation, it is also possible to employ a configuration where evaluation is performed only using the newly collected learning data. Further, it is also possible to use the above-described cross-validation method. In this case, because the past learning data and the new learning data are mixed, the learning data may be randomly divided. For example, processing of randomly sampling a predetermined number of pieces of test data and setting the remaining pieces of the test data as the training data is performed "K" times.

In the evaluation in step S108, weight of the new data may be set greater. For example, when a sum of errors is calculated, an error calculated for the new data is multiplied by weight greater than that for an error calculated for the past data. Further, in the case where the cross-validation method is used, it is also possible to make the new data more likely to be selected as the test data or the training data in sampling higher than the past data.

Here, while an example has been described above where the sum of errors between the output values of the tentative model and the actual values is used as the model evaluation value of the tentative model, the model evaluation value is not limited to this. For example, evaluation may be performed using the following expression (5). Here, while an example of a regression expression is indicated, in the case where a sum of the regression model and the spec model is used, it is only necessary to add in the following expression, a value obtained by normalizing a difference between an actual value and an estimated value of the spec model in accordance with the number of samples of the learning data.

[Expression 6]

$$ \mathrm{error}(samples) = \frac{(n+v)}{(n-v)}\left\{\frac{1}{n}\sum\nolimits_{samples}|y_i - \hat{y}_i|\right\} \ \ldots(5) $$

n: the number of samples of learning data belonging to a group
v: dimension number of the regression expression, that is, the number of features used
$y_i$ (i = 1, ..., n): measured value of power consumption of the i-th sample
$\hat{y}_i$ (i = 1, ..., n): predicted value of power consumption of the i-th sample

Further, other examples of the model evaluation value can include a mean squared error (MSE), a mean absolute error (MAE), an $R^2$ value (which is a square of a correlation coefficient R, and which is also referred to as a determination coefficient), a root mean square error (RMSE), a root mean square percentage error (RMSPE), or the like.

It is also possible to define the model evaluation value in which things other than the error between the measured value and the predicted value of the power consumption are also taken into account. For example, a value obtained by multiplying a data size of the model by a certain coefficient and adding the multiplication value to a value of the above-described sum of errors may be used as the model evaluation value. Because it takes longer time in operation of prediction using a model as a data size of the model is larger, by making it easier for a model of a smaller size to be selected, it is possible to expect reduction of an operation period and an operation amount.

The model manager 31 can automatically generate the classification rule as well as using the classification rule provided in advance as described above. In the case where the classification rule is automatically generated, after the classification rule is generated using a method which will be described below, processing of constructing a prediction model using the classification rule using the above-described method is performed. While, here, a case where the classification rule is a decision tree will be described, the classification rule is not limited to this. In the case where the classification rule is automatically generated, generation of the classification rule and construction of the prediction model are performed at the same time. The decision tree is repeatedly divided in a direction which reduces variation of prediction errors of the prediction model. Division of the node means generation of a plurality of child nodes of the node. For example, when the number of divisions of a certain node (parent node) is two, two child nodes are generated for the node. In other words, a data group belonging to the parent node is divided into data groups corresponding to the respective child nodes. In this case, it is necessary to determine the feature allocated to the parent node and branch conditions by a value of the feature. The feature allocated to the parent node may be an item existing in the learning data or may be an item obtained by performing operation on a plurality of items in the learning data. The number of divisions of the parent node does not have to be two, and may be three or more.

Here, an example will be considered where the classification rule (decision tree) is developed by division of a certain node into two being repeated. That is, by the parent group being divided into two groups (a left group and a right group), the classification rule is made to grow (a depth of the decision tree is made deeper). Upon determination as to which feature is allocated to the parent node and determination of a value of the feature which becomes branch conditions, SDR (Standard Deviation Reduction) is used.

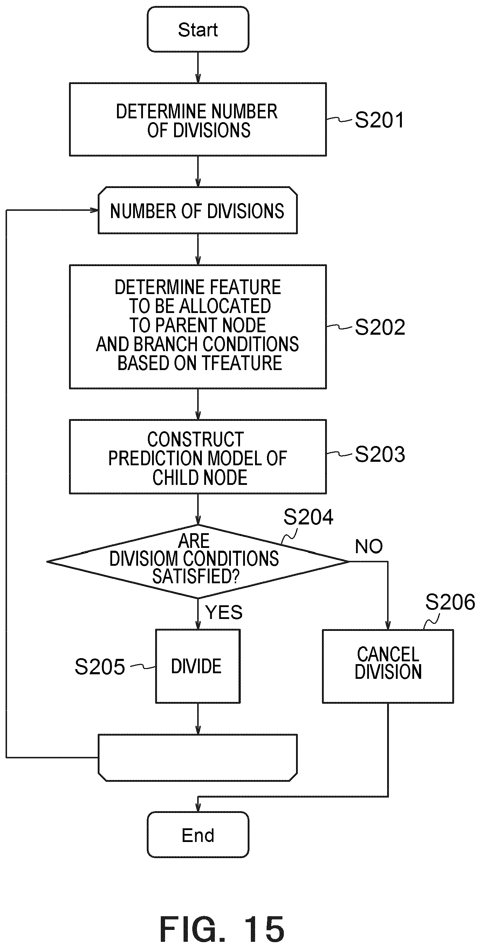

FIG. 15 is a flowchart illustrating an example of the operation of the model manager 31. First, the number of divisions is determined (S201). Here, it is assumed that the number of divisions is two. The number of divisions may be a predetermined value or may be a value determined in accordance with the number of pieces of learning data belonging to a node which is to be divided or the number of items included in the learning data.

The feature to be allocated to the parent node and a value of the feature which becomes the branch conditions (conditions of the feature) are determined so as to maximize the SDR (S202). The learning data is divided into two child nodes (a left child node (left group) and a right child node (right group)) under the conditions of the determined feature. The SDR is expressed using the following expression (6) as an example. In this example, the power consumption is used as the feature. Further, it is also possible to construct the prediction model first for the parent node and the child node and set an error between the predicted value and the measured value as the feature of the SDR.

[Expression 7]

$$SDR = sd(T) - \sum_{i \in \{left, right\}} \frac{|T_i|}{|T|} sd(T_i) \quad ...(6)$$

T: vector of power consumption belonging to the parent node (parent group). The number of samples is $|T|$.

$T\_i$ ($i \in$ {left, right}): vector of power consumption belonging to a left group or a right group. The number of samples is $|T\_i|$.

sd: function for obtaining standard deviation

The power consumption may be measured power consumption or may be power consumption calculated using the prediction model.

A plurality of values of the feature which become candidates for conditions are set, and the above-described SDR is calculated using the plurality of candidates. In this case, the candidates may be obtained by sorting the power consumption belonging to the parent node, and all the respective values may be set as the candidates. A pair of the feature with the greatest SDR and conditions of the feature is selected. In this manner, two child nodes are tentatively generated for the parent node. Note that the SDR can be calculated in a similar manner to a case where the node is divided into three or more. Note that, in the case where the node is divided into three, there are, for example, two values of the features which become candidates for conditions.

The learning data is divided into a plurality of groups using the generated decision tree, the prediction model is generated using the above-described method (S203), and the evaluation value of the prediction model (model evaluation value) is calculated. Whether the decision tree satisfies a division condition is judged on the basis of the model evaluation value of the prediction model of the parent node and the model evaluation value of the prediction model of each child node (S204). For example, if the model evaluation value of the prediction model of the parent node is greater than an average of the model evaluation values of the prediction models of the two child nodes (in the case where evaluation is higher as the model evaluation value is smaller), it is judged that the decision tree satisfies the division condition, otherwise, it is judged that the decision tree does not satisfy the division condition. In the case where the division condition are satisfied (Yes), it is determined to divide the parent node (the above-described two tentatively generated child nodes are adopted) (S205). Returning to step S202, processing similar to that described above is repeated using each child node as the parent node. Note that, when the feature which becomes a candidate for the feature to be allocated to each child node is determined in step S202, the feature which has already been allocated to an upper node (including the parent node) may be excluded.

In the case where the division condition are not satisfied (No), the tentatively generated child nodes are deleted (division is cancelled), the decision tree is returned to the decision tree before the child nodes are tentatively generated (S206), and the processing is finished. As a result of the present processing being recursively performed for each child node, a plurality of decision trees can be specified. In this case, for example, a decision tree is finally selected among these plurality of decision trees. For example, an evaluation value (rule evaluation value) indicating a prediction error of the child node is calculated. For example, a statistical value such as an average, a median value and a maximum value of the prediction errors is calculated. A decision tree with the smallest rule evaluation value is selected. In the case where the average is calculated, the prediction errors may be multiplied by weight in accordance with the number of pieces of data belonging to the child nodes (groups). Further, smaller weight may be applied to a group with a greater value which is obtained by dividing a total battery amount (a sum of battery capacity corresponding to the number of EVs) of the EVs belonging to the child nodes (groups) by power expense (which means that as the divided value is greater, the EV is less likely to run out of power). Further, the number of child nodes with prediction errors greater than a threshold may be counted, and a decision tree with the smallest number may be selected. Further, it is also possible to set a value obtained by adding a multiplication value of the number of child nodes by a constant coefficient to a value such as the statistical value calculated as described above, as the rule evaluation value. By this means, a decision tree with a smaller number of child nodes is likely to be selected, so that it is possible to reduce an operation amount and an operation period.

It is also possible to use conditions other than the above-described division condition as processing termination condition. For example, the processing may be finished on condition that the depth of the decision tree becomes a depth determined in advance. The processing may be finished on condition that a maximum value of the SDR becomes less than a threshold. Other conditions may be used.

The model manger 31 manages the generated respective prediction models and the classification rule in the model DB 32. The model manager 31 may mange model IDs of the respective prediction models, and coefficients of the features to be used in the respective prediction models in a model management table.

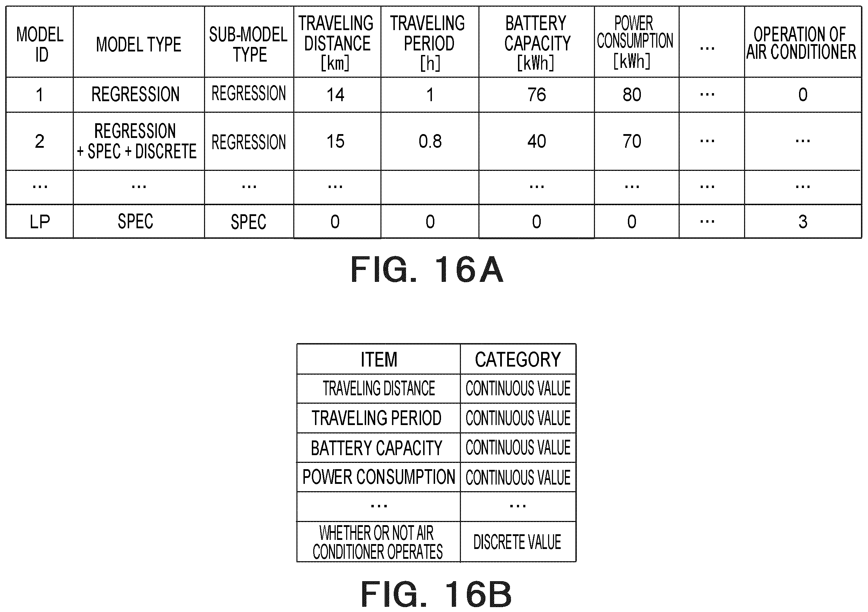

FIG. 16A illustrates an example of the model management table. Values of coefficients to be used are indicated for each feature (input variable) such as the power consumption and the battery capacity. The feature whose value is 0 means that the feature is not used. A table (category table) indicating a category as to whether the feature is a continuous value or a discrete value may be managed for each feature as illustrated in FIG. 16B. This table may be utilized for judgment as to whether each feature is used in the discrete value model or the continuous value model (the regression model, the spec model). Further, the classification rule may be held in the model DB 32 in a form (see FIG. 13) of a typical tree structure or may be held in a form of a program. Further, the model manager 31 may hold program codes (program codes of functions constituting the prediction model) of the respective prediction models in the model DB 32.

The predictor 41 predicts power consumption of the EV in the traveling section which is a prediction target using the prediction model and the prediction data of the EV. The prediction data is data including items to be used in each sub-model of the prediction model. However, there is also a case where items to be used in the sub-model are output values of other sub-models. The traveling section which is a prediction target is, for example, a section to a supply point at which charging is to be performed next.

The traveling state manager 51 manages a traveling state (such as, for example, power consumption for each section) in the traveling section of the EV which is traveling. The traveling state manager 51 acquires traveling data in the traveling section between points at which charging is performed for the EV which is traveling and manages the traveling data in a traveling management DB 52. The traveling data can be generated on the basis of data (information regarding the traveling state of the mobile apparatus) acquired at the respective managers 15 to 19 and the EV navigation utilization register 13.

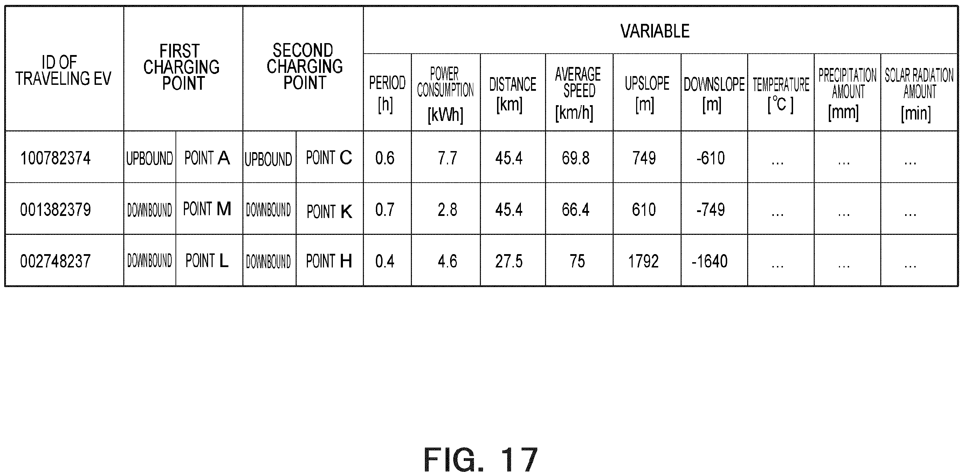

FIG. 17 illustrates an example of the traveling management DB 52 regarding the expressway. The first charging point, the second charging point and various kinds of variables are managed for each EV. In the case where charging is performed three or more times, a value of the second charging point is input in a column of the first charging point, and a value of the third charging point is input in a column of the second charging point. Values are input in a similar manner also in the case where charging is performed four or more times. A period is a period required for traveling in the traveling section, power consumption is power consumption (actual value) used for traveling in the traveling section, and a distance is a distance of the traveling section. An upslope is a length of a route with a gradient equal to or greater than a certain value in the traveling section. A downslope is a length of a route with a gradient less than a certain value in the traveling section (expressed with a negative value). The variables described here are merely an example, various kinds of variables can be used. For example, a total amount of charge at two points may be added as a total amount of charge. The traveling state manager 51 may add power consumption predicted in each traveling section for the EV after traveling is completed, to traveling data of the EV. Further, the first charging point and the second charging point may be arbitrary two points for which the power consumption is desired to be obtained. The arbitrary two points can be a plurality of kinds of combination such as, for example, between TCs, between ICs and between IC and a charging point.

Further, the traveling state manager 51 may perform processing of finding candidates for the supply point located in a reachable range (which may be called a driving range or a cruising range) from the remaining battery level of the EV using the predictor 41, and determining the next supply point of the EV among the found candidates. A start point of the traveling section to be predicted may be, for example, an arbitrary supply point or may be an arbitrary point during traveling. An end point of the traveling section is, for example, a supply point which becomes a candidate. The traveling state manger 51 may use a real-time current state value obtained from the predicted value, the road information and the weather information as time, average speed, or the like, of the traveling data to calculate the predicted value of the power consumption for the EV which is traveling. In the case where the location information on the EV is required, for example, the location information on the EV may be acquired from the GPS of the information device 201 through communication. In the case where information such as the remaining battery level of the battery of the EV is required, information such as the remaining battery level may be acquired from the information device 201 through communication, or information such as the remaining battery level may be calculated from the charger information. Alternatively, the remaining battery level may be estimated by utilizing power expense of the EV. In the case where the remaining battery level is required as the feature to be used in the prediction model, it is possible to use the remaining battery level acquired or estimated in this manner.

The traveling state manager 51 narrows down supply points which are reachable with the remaining battery level of the EV from the power consumption calculated for each candidate, and determines the next supply point among the supply points. Any method for determining the supply point can be used as long as a supply point which is reachable with the current remaining battery level is selected. For example, in the case where there is one route to a destination, a supply point with a shorter waiting period may be selected in view of congestion situations of the respective supply points, and, in the case where there are a plurality of routes to the destination, a supply point on the shortest route may be selected, or a supply point on a route with the least congestion or with the lowest gradient may be selected. A supply point before the EV gets off the expressway at the IC of the destination may be determined in view of the next reachable supply point after the EV gets off the expressway at the IC of the destination. Information on the determined supply point is transmitted to the information device 201 (EV) of the user. The transmitted information is displayed on a screen of the information device 201, and the user grasps the supply point to which the user is to be headed to next.

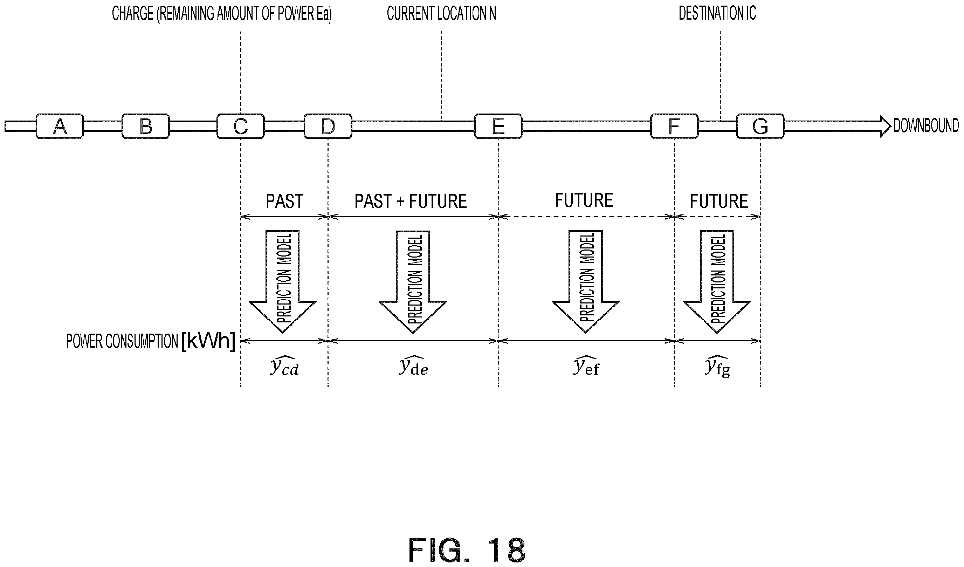

A specific example where the traveling state manager 51 calculates the remaining battery level will be described using FIG. 18.

Supply points A, B, C, D, E, F and G (hereinafter, points A to G) are disposed on the expressway. These points A to G are SA/PAs disposed along a certain route to a destination of the EV (destination IC). The EV is charged at the point C, and the traveling state manager 51 grasps the remaining battery level (which may be SoC (State of Charge)) after charging is completed from the charger information or information acquired from the information device 201. The remaining battery level is indicated as $E_a$. Further, the traveling state manager 51 can acquire information on speed of the EV and time from the GPS of the information device 201. The EV is currently traveling and is located between the point D and the point E. A section between two supply points X and Y will be described as a section XY. An example will be described where the traveling state manager 51 calculates power consumption in a section CD, a section DE, a section EF and a section FG when the EV is located at a current location. As an example of the feature to be used in the prediction model, speed (average speed) in the section and a traveling period required for traveling in the section are used.

The section CD is a past section in which the EV has already traveled. A traveling distance "$DIS_{cd}$" in the section CD and a traveling distance "$DIS_{dn}$" from the point D to the current location N can be grasped from the map information. Time at which the charging is completed at the point C can be grasped from the charger information or the information acquired from the information device 201. Time at the current location can be acquired from a timer inside the present device. Therefore, if time at which the charging is completed at the point C is regarded as time of departure from the point C, it is possible to calculate a period "$t_{cn}$" required for traveling from the point C to the current location N. Note that it is also possible to determine time at which the EV departs the point C on the basis of information acquired from the GPS of the EV. If traveling speed (average speed) "$v_{cd}$" from the point C to the point D is calculated as $(DIS_{cd} + DIS_{dn})$ / $t_{cn}$, a period "$t_{cd}$" required for traveling in the section CD can be calculated from $DIS_{cd} * v_{cd}$. Therefore, it is possible to calculate (predict) power consumption ($\hat{y}_{cd}$) in the section CD while "$v_{cd}$", "$t_{cd}$" and other required features are input in the prediction model. Note that, in the case where time at which the EV travels at point D can be acquired, "$v_{cd}$" may be calculated by dividing a distance between the section CD by a period required for traveling from the point C to the point D.

The section DE includes a section (past section) DN in which the EV has already traveled and a section (future section) NE in which the EV does not travel yet. If speed "$v_{dn}$" in the section DN is calculated as $(DIS_{cd} + DIS_{dn})$ / $t_{cn}$ in a similar manner to that in the section CD, a period "$t_{dn}$" required for traveling in the section DN can be calculated from $DIS_{dn} * v_{dn}$. Further, a value of the traffic counter (TC) disposed at the section is utilized as speed "$v_{ne}$" in the section NE. For example, the speed may be the latest value of the speed of the TC or may be an average in a past fixed period (for example, 30 minutes). A period "$t_{ne}$" required for traveling in the section NE can be calculated from $DIS_{ne}$ / $v_{ne}$. "$Dis_{ne}$" is a distance of the section NE. Therefore, a period "$t_{de}$" required for traveling in the section DE can be calculated from $t_{dn} + t_{ne}$. Further, traveling speed (average speed) "$v_{de}$" in the section DE can be calculated from $(DIS_{dn} + DIS_{ne})$ / $t_{de}$. Note that, in place of $DIS_{dn} + DIS_{ne}$, the distance $DIS_{de}$ of the section DE may be directly acquired from the map information. Therefore, it is possible to calculate (predict) power consumption ($\hat{y}_{de}$) in the section DE while "$v_{de}$", "$t_{de}$" and other required features are input in the prediction model.

The section EF is a section (future section) in which the EV does not travel yet. As speed "$v_{ef}$" in the section EF, a value of the traffic counter (TC) disposed in the section is utilized. For example, the speed may be the latest value of the speed of the TC or may be an average in a past fixed period (for example, 30 minutes). A period "$t_{ef}$" required for traveling in the section EF can be calculated from $DIS_{ef}$ / $v_{ef}$. Therefore, it is possible to calculate (predict) power consumption ($\hat{y}_{ef}$) in the section EF while "$v_{ef}$", "$t_{ef}$" and other required features are input in the prediction model.

The section FG is a section (future section) in which the EV does not travel yet. Therefore, it is possible to calculate (predict) power consumption ($\hat{y}_{fg}$) in the section FG in a similar manner to that in the section FG.

In this manner, in all cases including the case where the traveling section is the past section, the case where the traveling section includes both the past and the future sections, and the case where the traveling section is the future section, it is possible to calculate the power consumption of the EV. Therefore, it is possible to specify a reachable point with the current remaining battery level of the EV on the basis of the remaining battery level $E_a$ at the point C and the power consumption in each section.

The prediction evaluator 61 calculates a difference (error) between the predicted value of the power consumption and the actual value of the power consumption for the EV which has traveled in the section for which the power consumption is predicted by the traveling state manager 51. The prediction evaluator 61 calculates evaluation values (hereinafter, update determination evaluation values) for pairs of a plurality of prediction models and classification rules on the basis of the calculated errors. The actual value of the power consumption may be calculated from the charger information. The actual value of the power consumption in a section XY can be calculated on the basis of, for example, a difference between a power amount when charging is finished at a certain supply point X and a power amount when charging is started at a supply point Y at which charging is performed next. The predicted value of the power consumption in the section XY can be specified from a prediction result of the traveling state manager 51. The section XY may include a plurality of continuous sections predicted at the traveling state manager 51. For example, if the section XY is a section CF, the predicted value of the power consumption in the section CF can be calculated by adding predicted values in the section CD, in the section DE and in the section EF. Note that, in the case where information on the remaining battery level of the EV can be directly acquired from the information device 201 through communication, it is also possible to acquire the information and calculate the actual value of the power consumption.

The update determination evaluation value is used for determining whether or not to start processing for updating the classification rule and the prediction model. In the case where the update determination evaluation value satisfies an update start condition based on a threshold (for example, in the case where the update determination evaluation value is greater than a threshold), processing for updating the classification rule and the prediction model is started. In the case where an update determination condition is not satisfied (for example, in the case where the update determination evaluation value is smaller than a threshold), processing for updating the classification rule and the prediction model is not started.

The update determination evaluation value is calculated on the basis of errors calculated once or a plurality of times for a plurality of EVs so far. Every time an error is calculated for the EV, the update determination evaluation value is recalculated (updated). Specific examples of the update determination evaluation value can include a mean squared error (MSE), a mean absolute error (MAE), an $R^2$ value, a root mean square error (RMSE), a root mean square percentage error (RMSPE), or the like.

The update determination evaluation value may be calculated for each group which is classified using the classification rule. In the case where the number of groups which satisfy the update start condition among the groups is equal to or greater than a threshold, it may be judged that the update start condition is satisfied. It is also possible to calculate a statistical value (such as an average, a median value and a maximum value) of the update determination evaluation values among the groups, and judge that the update start condition is satisfied in the case where the statistical value is equal to or greater than a threshold (or less than a threshold, which of equal to or greater than a threshold and less than a threshold is used depends on a type of the statistical value). In the case where an average of the update determination thresholds among the groups is calculated, it is also possible to calculate a weighted average by applying weight to groups. Greater weight may be applied to a group to which a larger number of pieces of data belong. Further, smaller weight may be applied to a group with a greater value obtained by dividing a total battery amount of EVs belonging to the group (a sum of battery capacity corresponding to the number of EVs) by power expense (which means that the EV is less likely to run out of power as the divided value is greater).

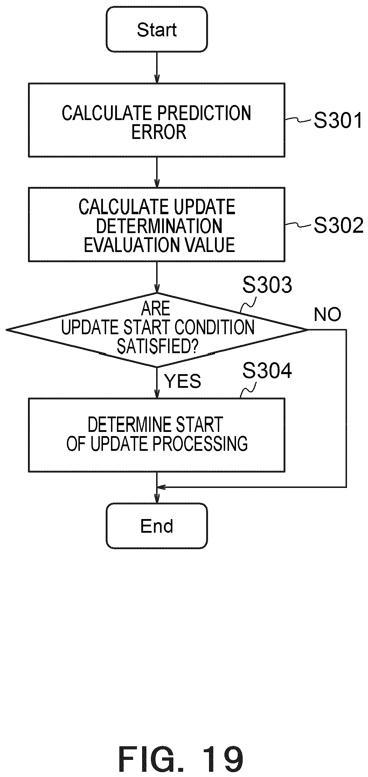

FIG. 19 is a flowchart illustrating an example of operation of the prediction evaluator 61. A difference (error) between the predicted value of the power consumption and the actual value of the power consumption is calculated for the EV which has traveled in the section for which power consumption is predicted at the traveling state manager 51 (S301). Evaluation values (update determination evaluation values) are calculated for pairs of a plurality of prediction models and classification rules on the basis of the calculated errors (S302). It is judged whether the update determination evaluation value satisfies an update start condition based on a threshold (S303), and, in the case where the update start condition is satisfied (Yes), it is determined to start processing for updating the classification rule and the prediction model (S304). In the case where the update start condition is not satisfied (No), processing for updating the classification rule and the prediction model is not started, and the processing is finished. The present flowchart may be performed, for example, every time the actual value and the predicted value of the power consumption are acquired for one EV, or may be performed for each fixed period or every time a given number of errors are calculated.

The model update manager 71 starts processing for updating at least one of the classification rule and the prediction model in the case where it is judged by the prediction evaluator 61 that the update start condition is satisfied.

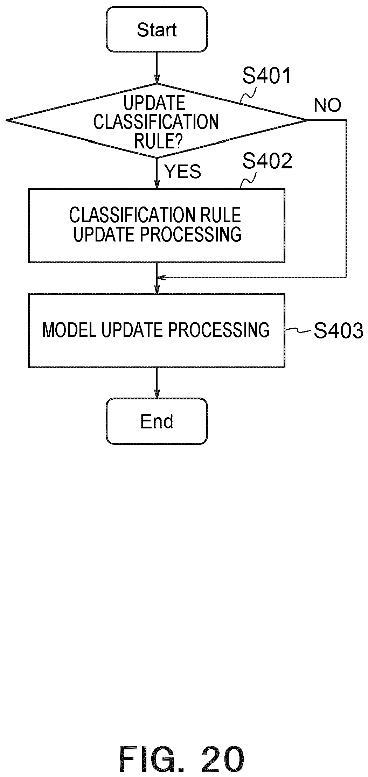

FIG. 20 is a flowchart illustrating an example of operation of the model update manager 71. It is judged whether or not to update the classification rule (S401). Whether or not to update the classification rule can be judged using an arbitrary method.

As an example, an error of the prediction model is calculated for each group classified using the classification rule. To calculate an error, for example, data in a fixed period is used. As data to be used for calculation of an error, data acquired after the prediction model is created is used. In addition to the data, it is also possible to use data used for creating the prediction model. An evaluation value (rule evaluation value) is calculated on the basis of an error of each group. For example, a statistical value such as an average, a median value and a maximum value of errors is calculated. If the rule evaluation value is equal to or greater than a threshold, it is judged to update the classification rule, and, if the rule evaluation value is less than the threshold, it is judged not to update the classification rule. In the case where the above-described average is calculated, a prediction error may be multiplied by weight in accordance with the number of pieces of data belonging to the child node (group). Further, smaller weight may be applied to a group having a greater value obtained by dividing a total battery amount (a sum of battery capacity corresponding to the number of EVs) of the EVs belonging to the child node (group) by power expense. This means that the EV is less likely to run out of power as the divided value is greater.

The above-described threshold may be input to the present device by the operator using input means. Further, a value obtained by multiplying an average of errors in a defined certain period by a certain coefficient may be used as the threshold. For example, in the case where an error up to $\beta$ times of the average of the errors in the period is allowed, the value of the certain coefficient is set at $\beta$.

As another example for judging whether or not to update the classification rule, the number of groups in which the error is equal to or greater than a certain value is counted. In the case where a count value is equal to or greater than a threshold, it is determined to update the classification rule. In the case where the count value is less than the threshold, it is determined not to update the classification rule. The threshold in this case may be input to the present device by the operator using the above-described input means. Further, the threshold may be a value obtained by multiplying the number of groups by a certain coefficient. For example, in the case where less than 5% of the number of groups is allowed as groups with large errors, the value of the certain coefficient is set at 0.05.

In the case where the classification rule is updated (Yes), the classification rule update processing described in FIG. 15 is performed (S402). The classification rule which is currently used (which will be referred to as an original classification rule or a first classification rule) is stored in the model DB 32 along with a classification rule which is newly generated in the classification rule update processing (which will be referred to as an update classification rule or a second classification rule). This is because there is a possibility of discarding the update classification rule and returning the classification rule to the original classification rule in model update processing which will be descried later. Subsequently, model update processing is performed on the basis of the update classification rule generated in the classification rule update processing (S403). Details of the model update processing will be described later.

Meanwhile, in the case where the classification rule is not updated (No), the model update processing is performed on the basis of the classification rule (original classification rule) which is currently used (S403).

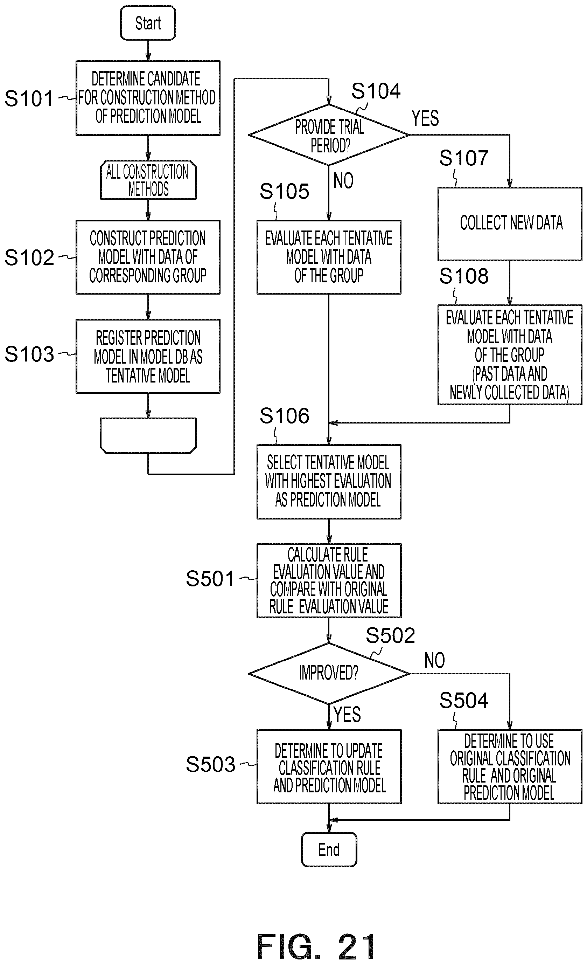

FIG. 21 is a flowchart illustrating an example of operation of the model update processing performed in the above-described step S403. A case will be assumed where the update classification rule is used as the classification rule. The processing from step S101 to S108 is the same as that in FIG. 14.

The model update manager 71 determines the prediction model of each group through the processing from step S101 to S108. The prediction model determined here will be referred to as an update prediction model. The update classification rule and the original classification rule are evaluated (S501). That is, concerning the update classification rule, a rule evaluation value (update rule evaluation value) is calculated using the update prediction model of each group. Further, concerning the original classification rule, a rule evaluation value (original rule evaluation value) is calculated using the original prediction model. Note that new data collected in step S107 corresponds to learning data (traveling data) acquired after the update classification rule is generated and after each tentative model is generated. The data to be used in step S105 corresponds to learning data (traveling data) acquired before the update classification rule is generated and before each tentative model is generated.

The update rule evaluation value is compared with the original rule evaluation value to judge whether the update classification rule and the update prediction model are improved from the original classification rule and the original prediction model (S502). For example, in the case where the update rule evaluation value is smaller than the original rule evaluation value, it is judged that the rule and the model are improved, otherwise, it is judged that the rule and the model are not improved. In the case where it is judged that the rule and the model are improved (Yes), the original classification rule and the original prediction model are updated with the update classification rule and the update prediction model (S503). The prediction model before update corresponds to a first prediction model, and the updated prediction model corresponds to a second prediction model. A plurality of conditions of the features included in the update classification rule correspond to a plurality of second conditions of the features. There can be a case where a plurality of second conditions become the same as a plurality of first conditions included in the original classification rule. Meanwhile, in the case where it is judged that the rule and the model are not improved (No), it is determined to continuously use the original classification rule (first classification rule) and the original prediction model (first prediction model) (S504). In this case, the update classification rule and the update prediction model may be discarded.

While, in the above description, a case has been assumed where the update classification rule is used as the classification rule, in the case where it is determined to use the original classification rule in the above-described classification rule update processing, the original classification rule is used. Also in this case, it is only necessary to perform processing which is the same as that in the flowchart in FIG. 21. However, while the processing is the same in that, in step S503, processing of updating the original prediction model with the update prediction model is performed, the processing is different from that in a case where the update classification rule is used in that the original classification rule is used as is as the classification rule.

(Other processing examples in the case where model update processing is performed using original classification rule as classification rule)

It is also possible to judge whether or not to perform update for each group, and update the prediction model only for a group for which it is determined to perform update, and it is not necessary to update the prediction model for a group for which it is determined not to perform update. In more details, a model evaluation value of the prediction model (original prediction model) of the group is calculated. If the model evaluation value is equal to or greater than a threshold, it is determined to start processing for updating the prediction model, and, if the model evaluation value is less than the threshold, it is determined not to start update processing for updating the prediction model. In the case where it is determined to start the processing, processing from S101 to S108 in FIG. 21 is performed to generate the prediction model (update prediction model) of the group. A model evaluation value (update model evaluation value) of the generated prediction model and a model evaluation value (original model evaluation value) of the original prediction model are calculated and compared with each other. If the update model evaluation value is smaller than the original model evaluation value, it is judged that the update prediction model is improved from the original prediction model, and the original prediction model is updated with the update prediction model. The updated prediction model corresponds to a third prediction model. In other cases, it is determined to use the original prediction model as is.

The threshold to be used for the above-described judgement as to whether or not to start the update processing may be input by the operator using input means. Further, a value obtained by multiplying an average of errors in a certain defined period by a certain coefficient may be used as the threshold. For example, in the case where an error up to $\beta$ times of the average of the errors in the period is allowed, the value of the certain coefficient is set at $\beta$.

Further, it is also possible to update only part of the classification rule in the above-described classification rule update processing. For example, a model evaluation value of the prediction model of each group of the classification rule is calculated, and a group for which the model evaluation value is equal to or greater than a threshold is specified. Nodes lower than the parent node of the child node to which the specified group belongs are to be updated. In the example in FIG. 13, it is assumed that the model evaluation values of the groups A and B are equal to or greater than the threshold, and the model evaluation value of the group C is less than the threshold. In this case, nodes lower than the parent node of "temperature < 20" are to be updated. The feature of "speed < 40" and a value (= 40) of the feature which specifies the branch conditions are maintained. In the model update processing, while processing may be similar to the processing in FIG. 21 described above, it is also possible to determine to continuously use the prediction model as is for the group C and exclude the group C from the group to be updated or it is also possible to generate the update prediction model in accordance with the processing of the flowchart in FIG. 21.

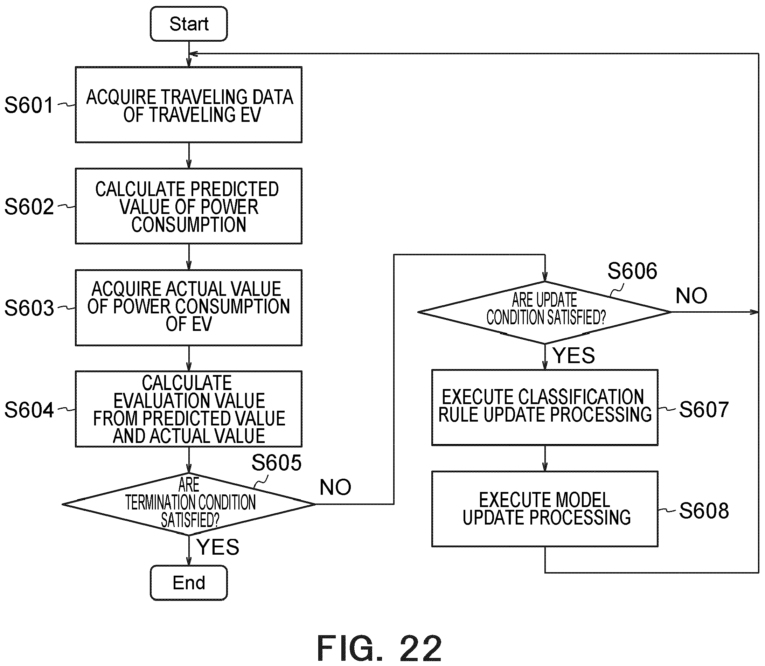

FIG. 22 is a flowchart illustrating an example of operation of the information processing apparatus 101 according to the present approach.

The traveling state manager 51 acquires traveling data of the EV which is traveling from the information device 201 (such as a smartphone and car navigation equipment) via the communicator 11 (S601). The traveling state manager 51 stores the acquired traveling data in the traveling management DB 52.

The predictor 41 calculates a predicted value of power consumption for a traveling section indicated by the traveling data using the acquired traveling data, the classification rule and a plurality of prediction models (prediction models of the respective groups) (S602). That is, the prediction model to be used is specified on the basis of the traveling data and the classification rule, and the predicted value of the power consumption is calculated on the basis of the specified prediction model and the traveling data.

The traveling state manager 51 acquires an actual value of the power consumption of the EV in the above-described traveling section (S603). The actual value may be acquired from the charger information or may be acquired from the information device 201.

The prediction evaluator 61 calculates an evaluation value (update determination evaluation value) on the basis of the calculated predicted value of the power consumption and the acquired actual value of the power consumption (S604).

The controller 21 judges whether a termination condition of the present processing are satisfied (S605). For example, in the case where the operator inputs a termination instruction, it is judged that the termination condition is satisfied. In the case where the termination condition is satisfied (Yes), the present processing is finished, while, in the case where the termination condition is not satisfied (No), the processing proceeds to step S606.

The prediction evaluator 61 judges whether or not to start processing for updating the classification rule and the prediction model on the basis of the evaluation value calculated in step S604 (S606). Specifically, it is judged whether the evaluation value satisfies the update start condition. For example, if the evaluation value is equal to or greater than a threshold, it is judged that the update start condition is satisfied, while if the evaluation value is less than the threshold, it is judged that the update start condition is not satisfied. In the case where it is judged that the update start condition is not satisfied (No), the processing returns to step S601.

In the case where it is judged that the update start condition is satisfied (Yes), the model update manager 71 performs the classification rule update processing (see FIG. 15) (S607). Continuously, the model update processing (see FIG. 21) is performed (S608). Thereafter, the processing returns to step S601.

There are various aspects such as a case where neither the classification rule nor the prediction model is updated, a case where only one of the classification rule and the prediction model is updated, a case where part of the classification rule and part of the prediction model are updated and a case where only part of the prediction model is updated, as a result of the classification rule update processing and the model update processing.

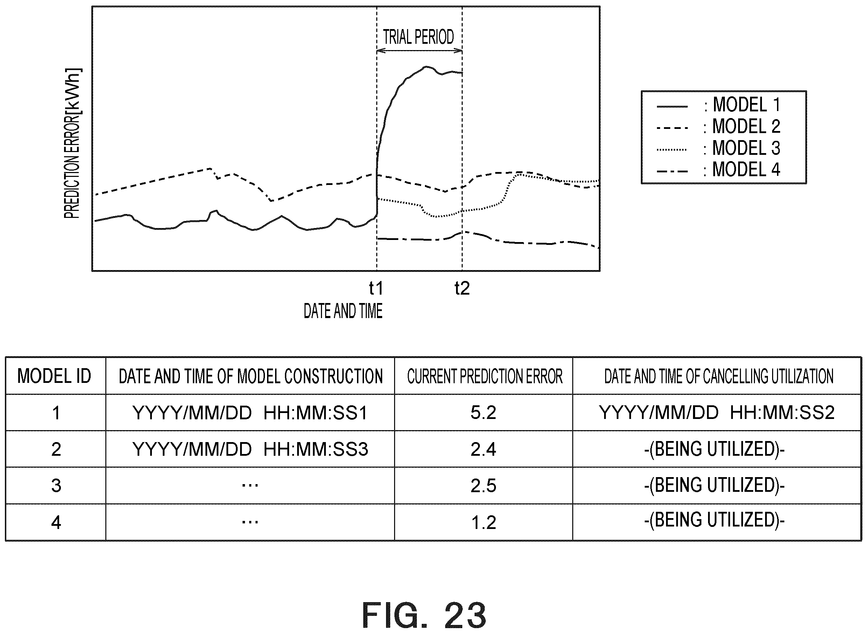

FIG. 23 illustrates an example of a system management screen. Transition data of prediction errors of the prediction models (prediction models of models 1 to 4) of the respective groups of the classification rule is indicated in an upper part of the drawing. Date and time at which the respective models are constructed, the latest prediction errors, and date and time at which utilization is cancelled are indicated in a table in a lower part of the drawing. The model 1 and the model 2 are used until time t1, and the prediction error of the model 1 sharply increases at time t1. As a result of increase in the prediction error of the model 1 at time t1, the classification rule update processing and the model update processing are performed through operation of the present approach. The model 3 and the model 4 are generated as the update models of the model 1. It is judged that it is not necessary to update the model 2, and the model 2 is continuously used. During a trial period, the model 3 and the model 4 are used in parallel with the model 1. The trial period is finished at time t2 (= YYYY/MM/DD HH:MM:SS2). Because an average model evaluation value of the model 3 and the model 4 is smaller than the model evaluation value of the model 1, utilization of the model 1 is cancelled, and the model 3 and the model 4 are used after time t2. The model 2 is continuously used also after time t2. Note that, in the table in the lower part of the drawing, a current prediction error of the model 1 is a value at time t2 (date and time at which utilization is cancelled).

As described above, according to the present approach, the predicted value and the actual value of the power consumption of the EV are acquired upon operation of the present information processing apparatus, and it is judged whether it is necessary to update the classification rule and the prediction model on the basis of an error between the predicted value and the actual value. In the case where it is necessary to perform update, the classification rule is updated (that is, a new classification rule is generated), and the prediction model in accordance with the updated classification rule is generated. In this manner, by the classification rule being updated, it is possible to construct a prediction model with high prediction performance.

Further, according to the present approach, the updated classification rule is evaluated with the past traveling data or the future traveling data, or both of them, and it is determined whether the prediction performance is improved compared to the prediction performance before update. In the case where the prediction performance degrades, the classification rule is returned to the original classification rule. By this means, it is possible to prevent the prediction performance from degrading by update of the classification rule.

According to the present approach, it is possible to secure prediction performance of power consumption while following increase in vehicle types, change in performance, and change in a utilization situation when the information provision system for EV is used for long periods of time.

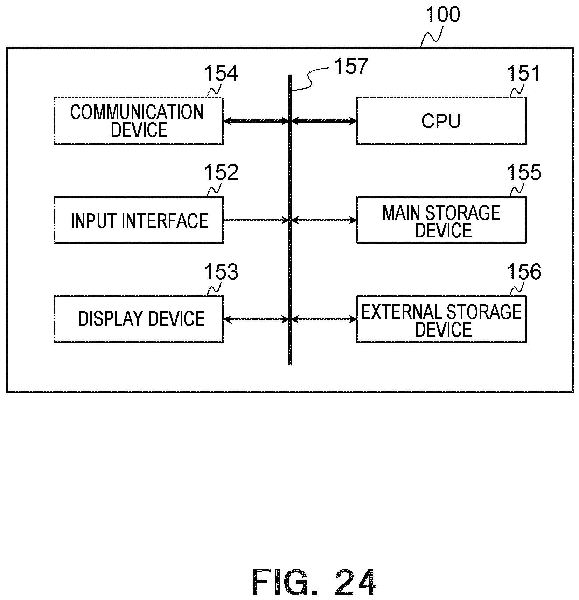

FIG. 24 illustrates a hardware configuration of the information processing apparatus 101 according to the present approach. The information processing apparatus 101 according to the present approach is configured with a computer device 100. The computer device 100 includes a CPU 151, an input interface 152, a display device 153, a communication device 154, a main storage device 155 and an external storage device 156, and these are connected to each other with a bus 157.

The CPU (Central Processing Unit) 151 executes a computer program which realizes the above-described respective functional configurations of the information processing apparatus 101 on the main storage device 155. By the CPU 151 executing the computer program, the respective functional configurations are realized.

The input interface 152 is a circuit for inputting an operation signal from the input device such as a keyboard, a mouse and a touch panel, to the information processing apparatus 101.

The display device 153 displays data or information output from the information processing apparatus 101. While the display device 153 is, for example, an LCD (Liquid Crystal Display), a CRT (Cathode-Ray Tube), and a PDP (Plasma Display Panel), the display device 153 is not limited to this. The data or the information output from the computer device 100 can be displayed by this display device 153.

The communication device 154 is a circuit for the information processing apparatus 101 to communicate with an external device in a wireless or wired manner. Information can be input from the external device via the communication device 154. Information input from the external device can be stored in a DB. The communicator 11 can be constructed on the communication device 154.

The main storage device 155 stores a program which realizes processing of the present approach, data required for execution of the program, data generated by execution of the program, and the like. The program is developed and executed on the main storage device 155. While the main storage device 155 is, for example, a RAM, a DRAM and an SRAM, the main storage device 155 is not limited to this. The storage in each approach may be constructed on the main storage device 155.

The external storage device 156 stores the above-described program, data required for execution of the program, data generated by execution of the program, and the like. These kinds of program and data are read out to the main storage device 155 upon processing of the present approach. While the external storage device 156 is, for example, a hard disk, an optical disk, a flash memory and a magnetic tape, the external storage device 156 is not limited to this. The storage in each approach may be constructed on the external storage device 156.

Note that the above-described program may be installed in the computer device 100 in advance or may be stored in a storage medium such as a CD-ROM. Further, the program may be uploaded on the Internet.

Note that the computer device 100 may include one or a plurality of the processors 151, the input interfaces 152, the display devices 153, the communication devices 154 and the main storage devices 155, or peripheral equipment such as a printer and a scanner may be connected to the computer device 100.

Further, the information processing apparatus 101 may be configured with a single computer device 100 or may be configured as a system including a plurality of computer devices 100 which are connected to each other.

While certain approaches have been described, these approaches have been presented by way of example only, and are not intended to limit the scope of the inventions. Indeed, the apparatuses described herein may be embodied in a variety of other forms; furthermore various omissions, substitutions and changes in the form of the apparatuses described herein may be made. The accompanying claims and their equivalents are intended to cover such forms or modifications as would fall within the scope of the inventions.

[Clauses]

Clause 1. An information processing apparatus comprising:

a traveling state manager (51) configured to acquire traveling data including a plurality of features of a mobile apparatus, based on information associated with a travelling state of the mobile apparatus; and
a predictor (41) configured to calculate a predicted value of consumed energy of the mobile apparatus based on a first classification rule and the traveling data,

the first classification rule associating a plurality of first conditions with a plurality of first prediction models for the consumed energy,
the first classification rule being configured to select the prediction model corresponding to a satisfied one of the first conditions and
the first conditions being associated with at least one of the plurality of features;

a prediction evaluator (61) configured to determine whether update of the first classification rule is required based on a difference between the predicted value of the consumed energy and an actual value of the consumed energy of the mobile apparatus; and
a model update manager (71) configured to generate a second classification rule based on the traveling data if the update of the first classification rule is required,

the second classification rule associating a plurality of second conditions with a plurality of second prediction models for consumed energy,
the second classification rule being configured to select the prediction model corresponding to a satisfied one of the second conditions and
the second conditions being associated with at least one of the plurality of features.

Clause 2. The information processing apparatus according to clause 1,
wherein the prediction evaluator (61) determines whether the update of at least one of the plurality of first prediction models is required based on the traveling data if the update of the first classification rule is not required, and
wherein the model update manager (71) generates a third prediction model which is a substitute for the least one first prediction model for which the update is determined, based on the traveling data, if the update of the at least one of the plurality of first prediction models is required.

Clause 3. The information processing apparatus according to clause 1 or 2,
wherein the predictor (41) performs first prediction of consumed energy for the mobile apparatus using the first classification rule, and
wherein the predictor (41) performs second prediction of consumed energy for the mobile apparatus using the second classification rule, and
wherein the model update manager (71) evaluates performance of the first prediction and performance of the second prediction based on actual values of consumed energy, and,
wherein the model update manager (71) determines to use the second classification rule in prediction of consumed energy for the mobile apparatus if the performance of the second prediction is higher than the performance of the first prediction, and,
wherein model update manager (71) determines to use the first classification rule in prediction of consumed energy consumed for the mobile apparatus if the performance of the first prediction is higher.

Clause 4. The information processing apparatus according to clause 3, wherein the predictor (41) performs the first prediction and the second prediction using the traveling data acquired after the second classification rule is generated.

Clause 5. The information processing apparatus according to clause 4, wherein the predictor (41) performs the first prediction and the second prediction further using the traveling data acquired before the second classification rule is generated.

Clause 6. The information processing apparatus according to any one of clauses 1 to 5,
wherein the first classification rule is a decision tree, the plurality of first prediction models are associated with a plurality of terminal nodes of the decision tree, and the plurality of first conditions are associated with nodes other than the plurality of terminal nodes of the decision tree, and/or
wherein the second classification rule is a decision tree, the plurality of second prediction models are associated with a plurality of terminal nodes of the decision tree, and the plurality of second conditions are associated with nodes other than the plurality of terminal nodes of the decision tree.

Clause 7. The information processing apparatus according to any one of clauses 1 to 6, wherein at least one of the plurality of first prediction models or at least one of the plurality of second prediction models is a sum of a plurality of types of models.

Clause 8. The information processing apparatus according to any one of clauses 1 to 8, wherein the travelling state of the mobile apparatus includes an operation condition of the mobile apparatus, characteristics of the mobile apparatus and a value indicating a mobile environment of the mobile apparatus.

Clause 9. An information processing method comprising:

acquiring traveling data including a plurality of features of a mobile apparatus, based on information associated with a travelling state of the mobile apparatus;
calculating a predicted value of consumed energy of the mobile apparatus based on a first classification rule and the traveling data,

the first classification rule associating a plurality of first conditions with a plurality of first prediction models for the consumed energy,
the first classification rule being configured to select the prediction model corresponding to a satisfied one of the first conditions and
the first conditions being associated with at least one of the plurality of features;

determining whether update of the first classification rule is required based on a difference between the predicted value of the consumed energy and an actual value of the consumed energy of the mobile apparatus; and
generating a second classification rule based on the traveling data if the update of the first classification rule is required,

the second classification rule associating a plurality of second conditions with a plurality of second prediction models of consumed energy,
the second classification rule being configured to select the prediction model corresponding to a satisfied one of the second conditions and

the second conditions being associated with at least one of the plurality of features.

Clause 10. A computer program for causing a computer to perform processes comprising:

acquiring traveling data including a plurality of features of a mobile apparatus, based on information associated with a travelling state of the mobile apparatus;
calculating a predicted value of consumed energy of the mobile apparatus based on a first classification rule and the traveling data,

the first classification rule associating a plurality of first conditions with a plurality of first prediction models for the consumed energy,
the first classification rule being configured to select the prediction model corresponding to a satisfied one of the first conditions and
the first conditions being associated with at least one of the plurality of features;

determining whether update of the first classification rule is required based on a difference between the predicted value of the consumed energy and an actual value of the consumed energy of the mobile apparatus; and
generating a second classification rule based on the traveling data if the update of the first classification rule is required,

the second classification rule associating a plurality of second conditions with a plurality of second prediction models of consumed energy,
the second classification rule being configured to select the prediction model corresponding to a satisfied one of the second conditions and
the second conditions being associated with at least one of the plurality of features.

## Claims

1. An information processing apparatus comprising:

a traveling state manager (51) configured to acquire traveling data including a plurality of features of a mobile apparatus, based on information associated with a travelling state of the mobile apparatus; and
a predictor (41) configured to calculate a predicted value of consumed energy of the mobile apparatus based on a first classification rule and the traveling data,

the first classification rule associating a plurality of first conditions with a plurality of first prediction models for the consumed energy,
the first classification rule being configured to select the prediction model corresponding to a satisfied one of the first conditions and
the first conditions being associated with at least one of the plurality of features;

a prediction evaluator (61) configured to determine whether update of the first classification rule is required based on a difference between the predicted value of the consumed energy and an actual value of the consumed energy of the mobile apparatus; and
a model update manager (71) configured to generate a second classification rule based on the traveling data if the update of the first classification rule is required,

the second classification rule associating a plurality of second conditions with a plurality of second prediction models for consumed energy,
the second classification rule being configured to select the prediction model corresponding to a satisfied one of the second conditions and
the second conditions being associated with at least one of the plurality of features.

2. The information processing apparatus according to claim 1,
wherein the prediction evaluator (61) determines whether the update of at least one of the plurality of first prediction models is required based on the traveling data if the update of the first classification rule is not required, and
wherein the model update manager (71) generates a third prediction model which is a substitute for the least one first prediction model for which the update is determined, based on the traveling data, if the update of the at least one of the plurality of first prediction models is required.

3. The information processing apparatus according to claim 1,
wherein the predictor (41) performs first prediction of consumed energy for the mobile apparatus using the first classification rule, and
wherein the predictor (41) performs second prediction of consumed energy for the mobile apparatus using the second classification rule, and
wherein the model update manager (71) evaluates performance of the first prediction and performance of the second prediction based on actual values of consumed energy, and,
wherein the model update manager (71) determines to use the second classification rule in prediction of consumed energy for the mobile apparatus if the performance of the second prediction is higher than the performance of the first prediction, and,
wherein model update manager (71) determines to use the first classification rule in prediction of consumed energy consumed for the mobile apparatus if the performance of the first prediction is higher.

4. The information processing apparatus according to claim 3, wherein the predictor (41) performs the first prediction and the second prediction using the traveling data acquired after the second classification rule is generated.

5. The information processing apparatus according to claim 4, wherein the predictor (41) performs the first prediction and the second prediction further using the traveling data acquired before the second classification rule is generated.

6. The information processing apparatus according to claim 1,
wherein the first classification rule is a decision tree, the plurality of first prediction models are associated with a plurality of terminal nodes of the decision tree, and the plurality of first conditions are associated with nodes other than the plurality of terminal nodes of the decision tree, and/or
wherein the second classification rule is a decision tree, the plurality of second prediction models are associated with a plurality of terminal nodes of the decision tree, and the plurality of second conditions are associated with nodes other than the plurality of terminal nodes of the decision tree.

7. The information processing apparatus according to claim 1, wherein at least one of the plurality of first prediction models or at least one of the plurality of second prediction models is a sum of a plurality of types of models.

8. The information processing apparatus according to claim 1, wherein the travelling state of the mobile apparatus includes an operation condition of the mobile apparatus, characteristics of the mobile apparatus and a value indicating a mobile environment of the mobile apparatus.

9. An information processing method comprising:

acquiring traveling data including a plurality of features of a mobile apparatus, based on information associated with a travelling state of the mobile apparatus;
calculating a predicted value of consumed energy of the mobile apparatus based on a first classification rule and the traveling data,

the first classification rule associating a plurality of first conditions with a plurality of first prediction models for the consumed energy,
the first classification rule being configured to select the prediction model corresponding to a satisfied one of the first conditions and
the first conditions being associated with at least one of the plurality of features;

determining whether update of the first classification rule is required based on a difference between the predicted value of the consumed energy and an actual value of the consumed energy of the mobile apparatus; and
generating a second classification rule based on the traveling data if the update of the first classification rule is required,

the second classification rule associating a plurality of second conditions with a plurality of second prediction models of consumed energy,
the second classification rule being configured to select the prediction model corresponding to a satisfied one of the second conditions and

the second conditions being associated with at least one of the plurality of features.

10. A computer program for causing a computer to perform processes comprising:

acquiring traveling data including a plurality of features of a mobile apparatus, based on information associated with a travelling state of the mobile apparatus;

calculating a predicted value of consumed energy of the mobile apparatus based on a first classification rule and the traveling data,

the first classification rule associating a plurality of first conditions with a plurality of first prediction models for the consumed energy,

the first classification rule being configured to select the prediction model corresponding to a satisfied one of the first conditions and

the first conditions being associated with at least one of the plurality of features;

determining whether update of the first classification rule is required based on a difference between the predicted value of the consumed energy and an actual value of the consumed energy of the mobile apparatus; and

generating a second classification rule based on the traveling data if the update of the first classification rule is required,

the second classification rule associating a plurality of second conditions with a plurality of second prediction models of consumed energy,

the second classification rule being configured to select the prediction model corresponding to a satisfied one of the second conditions and

the second conditions being associated with at least one of the plurality of features.

FIG. 1

EP 3 608 850 A1

| 201A | 201N | 211A | 211N |
|---|---|---|---|
| INFORMATION DEVICE | . . . INFORMATION DEVICE | SERVER | . . . SERVER |

220

INFORMATION PROCESSING APPARATUS ~101

# FIG. 2

| SUPPLY POINT | ADJACENT SUPPLY POINT | DISTANCE [km] | GRADIENT DIFFERENCE [m] | ALTITUTED DIFFERENCE [m] | REQUIRED PERIOD [h] | REQUIRED ENERGY [kWh] | POWER EXPENSE [km/kWh] |
|---|---|---|---|---|---|---|---|
| Q1 | Qj' | 42.1 | ... | ... | ... | ... | ... |
| ... | ... | ... | ... | ... | ... | ... | ... |
| Qj | Q4 | 24.7 | ... | ... | ... | ... | ... |
| ... | ... | ... | ... | ... | ... | ... | ... |
| Qn | Q49 | 64.1 | ... | ... | ... | ... | ... |

# FIG. 3

FIG. 4

| SUPPLY POINT | ADJACENT SUPPLY POINT | TC BETWEEN SUPPLY POINTS |
|---|---|---|
| Qj | Qj' | $TC_1, TC_2, \cdots$ |
| ... | ... | ... |

## FIG. 5

| | | TEMPERATURE [°C] | PRECIPITATION AMOUNT [mm] | DIRECTION OF WIND | AIR VOLUME [m] | TOTAL SOLAR RADIATION AMOUNT [min] | WEATHER |
|---|---|---|---|---|---|---|---|
| LOCATION 1 | DATE AND TIME 1 | ... | ... | ... | ... | ... | ... |
| LOCATION 1 | DATE AND TIME 2 | ... | ... | ... | ... | ... | ... |
| ... | ... | ... | ... | ... | ... | ... | ... |
| LOCATION n | DATE AND TIME m | ... | ... | ... | ... | ... | ... |

## FIG. 6

ID OF TC

| SPEED[km/h] | $TC_1$ | $TC_2$ | ... | $TC_g$ | ... |
|---|---|---|---|---|---|
| 17/2/1/ 0:00 | 89.2 | 91.0 | ... | 45.6 | ... |
| 17/2/1/ 0:10 | 90.1 | 88.9 | ... | 47.1 | ... |
| ... | ... | ... | ... | ... | ... |

TIME

## FIG. 7

| VEHICLE TYPE ID | EV MANUFACTURER | BATTERY TYPE | BATTERY CAPACITY [kWh] | POWER EXPENSE [km/kWh] | BATTERY DEGRADIATION RATE [kWh/day] | TOTAL WEIGHT [kg] | YEAR IN WHICH EV WAS SOLD |
|---|---|---|---|---|---|---|---|
| VEHICLE TYPE A | ... | ... | ... | ... | ... | ... | ... |
| VEHICLE TYPE B | ... | ... | ... | ... | ... | ... | ... |

## FIG. 8

| EV_ID | SUPPLY POINT | CHARGING START TIME | CHARGE AMOUNT AT START [kWh] | CHARGING END TIME | CHARGE AMOUNT AT END [kWh] |
|---|---|---|---|---|---|
| 201653 | Q4 | 2018/06/20 12:00 | 12.7 | 2018/06/20 12:30 | 23.5 |
| 123456 | Qj | 2018/06/20 12:10 | 3.9 | 2018/06/20 12:40 | 34.4 |
| ... | ... | | ... | | ... |
| 123456 | Qj' | 2018/06/21 14:30 | 6.3 | 2018/06/21 14:50 | 12.0 |
| ... | ... | | ... | | ... |
| 728579 | Q3 | 2018/06/21 17:30 | 2.87 | 2018/06/21 17:55 | 10.9 |

FIG. 9

| EV_ID | SUPPLY POINT | CHARGING START TIME | CHARGING END TIME | CHARGE AMOUNT AT START [kWh] | CHARGE AMOUNT AT END [kWh] |
|---|---|---|---|---|---|
| 000782379 | ●●● | 4/15 8:30 | 4/15 8:52 | 20 | 75 |
| 000782379 | △△△ | 4/15 10:56 | 4/15 11:17 | 25 | 48 |
| 000782379 | ... | ... | ... | ... | ... |

| EV_ID | SUPPLY POINT | NEXT SUPPLY POINT | CHARGING END TIME | NEXT CHARGING START TIME | CHARGE AMOUNT AT START OF NEXT CHARGING [kWh] | CHARGE AMOUNT AT END [kWh] | POWER CONSUMPTION [kWh] |
|---|---|---|---|---|---|---|---|
| 000782379 | ●●● | △△△ | 4/15 8:52 | 4/15 10:56 | 25 | 75 | 50 (=75-25) |

FIG. 10

| EV_ID | GPS INFORMATION POINT | CHARGE AMOUNT [kWh] |
|---|---|---|
| 000782379 | ●●● | 80 |
| 000782379 | △△△ | 67 |
| 000782379 | … | … |

| EV_ID | GPS | NEXT GPS | POWER CONSUMPTION [kWh] |
|---|---|---|---|
| 000782379 | ●●● | △△△ | 13(=80-67) |

## FIG. 11

| HISTORY ID | POWER CONSUMPTION [kWh] | DISTANCE | SPEED [km] | TRAVELING PERIOD [h] | BATTERY CAPACITY [kWh] | WHETHER OR NOT AIR CONDITIONER OPERATES | TEMPERATURE [°C] | VEHICLE TYPE | … |
|---|---|---|---|---|---|---|---|---|---|
| 73288 | 6.4 | 23.5 | 70 | 0.5 | 76 | OPERATE | … | VEHICLE TYPE A | … |
| 6283 | 8.4 | 34.4 | 90 | 1.1 | 90 | NOT OPERATE | … | VEHICLE TYPE A | … |
| … | … | … | … | … | … | … | … | … | … |
| 54933 | 6.9 | 24.7 | 85 | 2.1 | 100 | OPERATE | … | VEHICLE TYPE C | … |

## FIG. 12

LEARNING DATA

SPEED＜40 ～301

TRUE          FALSE

TEMPERATURE < 20 ～302          GROUP C

TRUE   FALSE                              305

GROUP A          GROUP B

303          304

# FIG. 13

Start

S101 — DETERMINE CANDIDATE FOR
CONSTRUCTION METHOD OF
PREDICTION MODEL

ALL CONSTRUCTION
METHODS

S102 — CONSTRUCT PREDICTION MODEL
WITH DATA OF
CORRESPONDING GROUP

S103 — REGISTER PREDICTION MODEL
IN MODEL DB AS
TENTATIVE MODEL

S104
PROVIDE TRIAL
PERIOD?

YES

NO

S105
EVALUATE EACH TENTATIVE
MODEL WITH DATA
OF THE GROUP

S107
COLLECT NEW DATA

S108
EVALUATE EACH TENTATIVE
MODEL WITH DATA
OF THE GROUP
(PAST DATA AND NEWLY
COLLECTED DATA)

S106
EVALUATE EACH TENTATIVE
MODEL WITH DATA
OF THE GROUP

End

FIG. 14

```
                        ┌──────────┐
                        │  Start   │
                        └────┬─────┘
                             │
                             ▼
              ┌──────────────────────────┐
              │  DETERMINE NUMBER         │──── S201
              │  OF DIVISIONS             │
              └──────────────┬───────────┘
                             │
                             ▼
              ┌──────────────────────────┐
              │  NUMBER OF DIVISIONS      │
              └──────────────┬───────────┘
                             │
                             ▼
              ┌──────────────────────────┐
              │  DETERMINE FEATURE        │
              │  TO BE ALLOCATED          │
              │  TO PARENT NODE           │──── S202
              │  AND BRANCH CONDITIONS    │
              │  BASED ON TFEATURE        │
              └──────────────┬───────────┘
                             │
                             ▼
              ┌──────────────────────────┐
              │  CONSTRUCT                │
              │  PREDICTION MODEL OF      │──── S203
              │  CHILD NODE               │
              └──────────────┬───────────┘
                             │             S204
                             ▼
                    ◇─────────────────◇
                    │      ARE        │        NO
                    │ DIVISIOM CONDITIONS ─────────┐
                    │   SATISFIED?    │            │
                    ◇────────┬────────◇            │  S206
                             │ YES                 ▼
                    ┌────────────────┐    ┌────────────────┐
             S205───│    DIVIDE      │    │  CANCEL        │
                    └────────┬───────┘    │  DIVISION      │
                             │            └────────┬───────┘
                             ▼                     │
              ┌──────────────────────────┐         │
              │                          │         │
              └──────────────────────────┘         │
                             │                     │
                             ▼                     │
                        ┌──────────┐               │
                        │   End    │◄──────────────┘
                        └──────────┘
```

# FIG. 15

| MODEL ID | MODEL TYPE | SUB-MODEL TYPE | TRAVELING DISTANCE [km] | TRAVELING PERIOD [h] | BATTERY CAPACITY [kWh] | POWER CONSUMPTION [kWh] | ... | OPERATION OF AIR CONDITIONER |
|---|---|---|---|---|---|---|---|---|
| 1 | REGRESSION | REGRESSION | 14 | 1 | 76 | 80 | ... | 0 |
| 2 | REGRESSION + SPEC + DISCRETE | REGRESSION | 15 | 0.8 | 40 | 70 | ... | ... |
| ... | ... | ... | ... | | ... | ... | ... | ... |
| LP | SPEC | SPEC | 0 | 0 | 0 | 0 | ... | 3 |

## FIG. 16A

| ITEM | CATEGORY |
|---|---|
| TRAVELING DISTANCE | CONTINUOUS VALUE |
| TRAVELING PERIOD | CONTINUOUS VALUE |
| BATTERY CAPACITY | CONTINUOUS VALUE |
| POWER CONSUMPTION | CONTINUOUS VALUE |
| ... | ... |
| WHETHER OR NOT AIR CONDITIONER OPERATES | DISCRETE VALUE |

## FIG. 16B

| ID OF TRAVELING EV | FIRST CHARGING POINT | | SECOND CHARGING POINT | | VARIABLE | | | | | | | | |
|---|---|---|---|---|---|---|---|---|---|---|---|---|---|
| | | | | | PERIOD [h] | POWER CONSUMPTION [kWh] | DISTANCE [km] | AVERAGE SPEED [km/h] | UPSLOPE [m] | DOWNSLOPE [m] | TEMPERATURE [°C] | PRECIPITATION AMOUNT [mm] | SOLAR RADIATION AMOUNT [min] |
| 100782374 | UPBOUND | POINT A | UPBOUND | POINT C | 0.6 | 7.7 | 45.4 | 69.8 | 749 | -610 | ... | ... | ... |
| 001382379 | DOWNBOUND | POINT M | DOWNBOUND | POINT K | 0.7 | 2.8 | 45.4 | 66.4 | 610 | -749 | ... | ... | ... |
| 002748237 | DOWNBOUND | POINT L | DOWNBOUND | POINT H | 0.4 | 4.6 | 27.5 | 75 | 1792 | -1640 | ... | ... | ... |

FIG. 17

FIG. 18

EP 3 608 850 A1

```
              ┌─────────────┐
              │    Start    │
              └──────┬──────┘
                     │
                     ▼
        ┌────────────────────────┐
        │  CALCULATE PREDICTION  │ ～S301
        │         ERROR          │
        └────────────┬───────────┘
                     │
                     ▼
        ┌────────────────────────┐
        │    CALCULATE UPDATE     │ ～S302
        │     DETERMINATION       │
        │    EVALUATION VALUE     │
        └────────────┬───────────┘
                     │         S303
                     ▼        ╱
                  ◇ ARE ◇           NO
          UPDATE START CONDITION ───────┐
                SATISFIED?              │
                     │                  │
                  YES│  S304            │
                     ▼ ╱                │
        ┌────────────────────────┐     │
        │    DETERMINE START      │     │
        │  OF UPDATE PROCESSING   │     │
        └────────────┬───────────┘     │
                     │◄─────────────────┘
                     ▼
              ┌─────────────┐
              │     End     │
              └─────────────┘
```

# FIG. 19

FIG. 20

Start

S101 — DETERMINE CANDIDATE FOR CONSTRUCTION METHOD OF PREDICTION MODEL

ALL CONSTRUCTION METHODS

S102 — CONSTRUCT PREDICTION MODEL WITH DATA OF CORRESPONDING GROUP

S103 — REGISTER PREDICTION MODEL IN MODEL DB AS TENTATIVE MODEL

S104 — PROVIDE TRIAL PERIOD?

YES

NO

S105 — EVALUATE EACH TENTATIVE MODEL WITH DATA OF THE GROUP

S107 — COLLECT NEW DATA

S108 — EVALUATE EACH TENTATIVE MODEL WITH DATA OF THE GROUP (PAST DATA AND NEWLY COLLECTED DATA)

S106 — SELECT TENTATIVE MODEL WITH HIGHEST EVALUATION AS PREDICTION MODEL

S501 — CALCULATE RULE EVALUATION VALUE AND COMPARE WITH ORIGINAL RULE EVALUATION VALUE

S502 — IMPROVED?

NO

YES

S503 — DETERMINE TO UPDATE CLASSIFICATION RULE AND PREDICTION MODEL

S504 — DETERMINE TO USE ORIGINAL CLASSIFICATION RULE AND ORIGINAL PREDICTION MODEL

End

FIG. 21

```
                    ┌─────────┐
                    │  Start  │
                    └────┬────┘
                         │
         ┌───────────────▼───────────────┐
 S601 ~  │   ACQUIRE TRAVELING DATA       │
         │      OF TRAVELING EV           │
         └───────────────┬───────────────┘
                         │
         ┌───────────────▼───────────────┐
 S602 ~  │    CALCULATE PREDICTED         │
         │     VALUE OF POWER             │
         │      CONSUMPTION               │
         └───────────────┬───────────────┘
                         │
         ┌───────────────▼───────────────┐
 S603 ~  │   ACQUIRE ACTUAL VALUE         │
         │  OF POWER CONSUMPTION          │
         │        OF EV                   │
         └───────────────┬───────────────┘
                         │
         ┌───────────────▼───────────────┐
 S604 ~  │       CALCULATE                │
         │    EVALUATION VALUE            │
         │  FROM PREDICTED VALUE          │
         │    AND ACTUAL VALUE            │
         └───────────────┬───────────────┘
                         │          S605
                    ╱────▼────╲
                   ╱    ARE     ╲     NO
                  ╱ TERMINATION   ╲────────
                  ╲  CONDITION    ╱
                   ╲ SATISFIED?  ╱
                    ╲────┬────╱
                      YES│
                    ┌────▼────┐
                    │   End   │
                    └─────────┘
```

S606

ARE UPDATE CONDITION SATISFIED? — NO

YES

EXECUTE CLASSIFICATION RULE UPDATE PROCESSING ~S607

EXECUTE MODEL UPDATE PROCESSING ~S608

FIG. 22

| MODEL ID | DATE AND TIME OF MODEL CONSTRUCTION | CURRENT PREDICTION ERROR | DATE AND TIME OF CANCELLING UTILIZATION |
|---|---|---|---|
| 1 | YYYY/MM/DD HH:MM:SS1 | 5.2 | YYYY/MM/DD HH:MM:SS2 |
| 2 | YYYY/MM/DD HH:MM:SS3 | 2.4 | -(BEING UTILIZED)- |
| 3 | ... | 2.5 | -(BEING UTILIZED)- |
| 4 | ... | 1.2 | -(BEING UTILIZED)- |

FIG. 23

EP 3 608 850 A1

100

154 157 151

| COMMUNICATION DEVICE | CPU |

152 155

| INPUT INTERFACE | MAIN STORAGE DEVICE |

153 156

| DISPLAY DEVICE | EXTERNAL STORAGE DEVICE |

FIG. 24

Europäisches
Patentamt

European
Patent Office

Office européen
des brevets

# EUROPEAN SEARCH REPORT

Application Number

EP 19 19 0973

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 106 740 222 A (UNIV GUIZHOU) 31 May 2017 (2017-05-31) * the whole document * | 1-10 | INV. G06Q10/04 G06Q10/06 |
| X | EP 2 295 935 A1 (CLARION CO LTD [JP]) 16 March 2011 (2011-03-16) * paragraph [0002] - paragraph [0184]; figures 1-16 * | 1-10 | |
| X | JP 2016 223784 A (NISSAN MOTOR) 28 December 2016 (2016-12-28) * paragraphs [0001] - [0034] * | 1-10 | |
| X | EP 2 789 977 A1 (HITACHI LTD [JP]) 15 October 2014 (2014-10-15) * paragraph [0003] - paragraph [0154]; figures 1-14 * | 1-10 | |

TECHNICAL FIELDS
SEARCHED (IPC)

G06Q

The present search report has been drawn up for all claims

| Place of search | Date of completion of the search | Examiner |
|---|---|---|
| Munich | 4 December 2019 | Pastore, Edoardo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 19 19 0973

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2019

| Patent document cited in search report | | Publication date | Patent family member(s) | | Publication date |
|---|---|---|---|---|---|
| CN 106740222 | A | 31-05-2017 | NONE | | |
| EP 2295935 | A1 | 16-03-2011 | CN | 102023018 A | 20-04-2011 |
| | | | EP | 2295935 A1 | 16-03-2011 |
| | | | JP | 5135308 B2 | 06-02-2013 |
| | | | JP | 2011059921 A | 24-03-2011 |
| | | | US | 2011060495 A1 | 10-03-2011 |
| JP 2016223784 | A | 28-12-2016 | JP | 6569300 B2 | 04-09-2019 |
| | | | JP | 2016223784 A | 28-12-2016 |
| EP 2789977 | A1 | 15-10-2014 | CN | 104024800 A | 03-09-2014 |
| | | | EP | 2789977 A1 | 15-10-2014 |
| | | | JP | WO2013084931 A1 | 27-04-2015 |
| | | | US | 2014303826 A1 | 09-10-2014 |
| | | | WO | 2013084931 A1 | 13-06-2013 |

EPO FORM P0459

For more details about this annex : see Official Journal of the European Patent Office, No. 12/82